# EUROPEAN PATENT SPECIFICATION

(11) **EP 4 110 535 B1**
(45) Date of publication and mention of the grant of the patent: **03.04.2024**
(21) Application number: 21714439.3
(22) Date of filing: 26.02.2021
(51) Int. Cl.: B21D 43/00, B21D 43/28, B21F 23/00, B65G 47/00

(54) **METHOD AND APPARATUS FOR COLLECTING AND FEEDING METAL ELONGATED ELEMENTS**
VERFAHREN UND VORRICHTUNG ZUM SAMMELN UND ZUFÜHREN VON LÄNGLICHEN METALLELEMENTEN
PROCÉDÉ ET APPAREIL DE RAMASSAGE ET D'ACHEMINEMENT D'ÉLÉMENTS MÉTALLIQUES ALLONGÉS

(30) Priority: 26.02.2020 IT 202000004021
(43) Date of publication of application: 04.01.2023
(73) Proprietor: Schnell S.p.A., 61036 Colli al Metauro (PU) (IT)
(72) Inventor: MIGLIORANZA, Aronne, 61036 Colli al Metauro (PU) (IT)
(74) Representative: Manzella & Associati
(86) International application number: PCT/IT2021/050044
(87) International publication number: WO 2021/171328

(56) References cited:
- EP-A1- 1 706 231
- EP-A1- 1 980 341
- EP-A1- 2 268 429

## Description

### Technical Field

The present invention relates to a method and an apparatus for collecting and feeding metal elongated elements, in particular metal elements such as metal profiles and rods in bars for reinforced concrete, for example intended for a cutting, bending, welding cycle or other processing.

### Background of the invention

Apparatuses are known for processing elongated metal elements, in particular metal profiles and similar products in bars, which require to feed these elements, for example to gather them in a desired number or to directly carry out cutting and/or bending operations on a part of the aforementioned elements.

It should be noted that the elements in question, in particular the metal bars, are generally stored and transported in bundles which, for production needs, can be of considerable length, from 12 to 24 meters.

Since the metal elements, in particular those intended for reinforcing reinforced concrete, are considerably extended, even though they are made of steel, they prove to be particularly flexible. This circumstance is the more accentuated when the ratio between the longitudinal extension of the elements and the respective transverse dimension is high. Because of this flexibility, these elements easily intertwine with each other when grouped into bundles, thus assuming a disordered configuration.

In this regard it should also be noted that the elements used for reinforcing reinforced concrete, in addition to being heavy and therefore difficult to handle as such, are often provided with ribs on the external surfaces, to improve the adhesion properties to the covering material, generally concrete. The presence of ribs, however, further hinders the mutual sliding between the elements to be untangled, therefore the untangling operations necessary before any processing.

The known solutions for separating said metal elongated elements from the bundles, in particular steel rods for reinforced concrete, are bulky, therefore expensive, and sometimes not very reliable in disentangling elements of very small transverse dimensions in relation to their length.

These solutions can include apparatuses equipped with one or more branches of conveyor chains suitable for transversely support the elements to be handled. These chains are operated according to an alternating motion, in particular a transverse oscillatory motion which moves the elements to be untangled. This oscillatory motion has the function of unraveling, that is, untangling the most entangled elements, and then progressively arranges the group of elements treated on the same plane, so as to disentangle it. Only after this operation a group or a subsequent machine can be able to collect and count the bars.

However, these solutions, which are complex, bulky and expensive, do not fully meet the needs of the specific sector, often being ineffective and poorly accurate. Above all, they do not lend themselves to quickly switching from one type of bar to another, that is frequently necessary since in most cases the bundle of bars is not used entirely. This means that a different type of bars must be used, for example of different diameter or different length, the remaining bars must firstly be removed from the machine. This operation requires an unacceptable time for production needs.

On the other hand, those apparatuses that are capable of collecting metal elongated elements, preferably bars, stored in multiple housing compartments, are particularly advantageous from the production point of view, so as to make available a wide range, in terms of diameter and length, of different elements.

Transversely movable apparatuses are known, in particular the patent EP 1356875 of the same Applicant, or fixed apparatuses, for collecting metal bars, with respect to a storage wherein respective housing compartments are obtained for the different types of bars to be collected. Such apparatuses comprise gripping means capable of acting on end portions of the bars to be collected.

The same type of apparatuses, which are mobile or fixed with respect to a storage, have the advantage of being equipped with gripping and feeding assemblies of reduced size, but have the disadvantage of offering limited productivity. In fact, the number of metal bars that can be fed, for example by dragging the end of the material, to the downstream processing machine is reduced.

Patents EP 1980341, EP 1706231 and EP 2268429 show examples of such apparatuses.

The apparatuses that provide for removing the elements, in particular bars, at a respective end, are suitable for being associated with downstream apparatuses, equipped with extraction systems for extracting the bars from the bundle. To remove the bars from the bundle, which can be considerably intertwined, the drawing effort, also due to the presence of ribs, is considerable, as well as differentiated, according to the opposite resistance, for each bar to be extracted. This creates many problems for the drawing means, which have difficulty in keeping several bars in grip at the same time, moreover those having an irregular section. Therefore, the bars often advance by quantities that are not perfectly equal to each other.

Moreover, it is difficult to carry out the dragging if not a very limited number of bars, which turns to the disadvantage of productivity, which is therefore limited.

Also the patent EP1356876 again by the same Applicant, show known apparatuses for feeding metal bars, movable transversely with respect to a storage wherein respective housing compartments are obtained for the bars to be collected.

In the latter type of apparatuses, the bars are collected in a central position with respect to the bundle. Their use usually occurs in combination with apparatuses with bed feeding of motorized rollers, therefore capable of handling a greater number of bars at the same time, and therefore capable of carrying out high productions.

In this case the bars, for example to be cut, are deposited on a feeding way with motorized rollers to be transferred to a shear. In this way there is no resistance to advancement because the bars have already been untangled from the bundle and move all together; therefore their number can be much greater than in the two cases of known solutions, illustrated previously.

The bars, therefore, have no difficulty in advancing and substantially have no numerical limitation, because they are placed on a bed of motorized rollers. This type of apparatuses does not have the necessity of extracting bars from the bundle and having to draw them by tightening them by means of drawing wheels positioned only at the head, as happens instead in apparatuses in which the collecting takes place at one end of the bars.

The structure of the apparatus according to the patent EP1356876, however, provides for a mobile, bridge-like architecture, which is very expensive and bulky. The operating cycle of the apparatus is therefore relatively slow due to the moving masses and the numerous round trips from the position of the compartments containing the different bundles to the machine to be fed, at each cycle. So, in this case, the apparatus must make one outward and one return journey at each cutting cycle, sometimes having to cover a considerable distance.

### Disclosure

The aim of the present invention is to solve the aforementioned problems, devising a method and an apparatus for collecting and feeding metal elongated elements, in particular metal profiles in bars for reinforced concrete.

Another object of the present invention is to provide an apparatus for collecting and feeding metal elongated elements, of simple constructive and functional conception, provided with safe and reliable use, as well as being relatively inexpensive.

The aforementioned purposes are achieved, according to the present invention, by the method for collecting and feeding metal elongated elements according to claim 1 and by the apparatus for collecting and feeding the same elements according to claim 21.

The method according to the invention provides for:
a. arranging along a longitudinal direction a plurality of metal elongated elements, resting in a storage compartment;
b. arranging an apparatus for collecting and feeding the same elements, comprising a fixed structure, developing along the same longitudinal direction and having, preferably in a substantially central position of the aforementioned development, a gripping member arranged in an active position for collecting the elements at a collecting area; c. operating the gripping member relative to the storage compartment according to a collecting motion, in a lowering stroke to bring the gripping member towards a substantially central gripping portion of the elements, arranged at a collecting height, and in a lifting stroke to lift at least a part of the elements at the respective gripping portion, from the collecting height to a higher height.

Preferably after step c., in which the gripping member is operated in the collecting motion, a desired number of elements among the collected elements is selected by counting and/or selection means.

The method according to the invention then provides for the step
d. of releasing the collected elements to a transfer assembly at a transfer height, to be transferred by means of a transfer motion to a feeding path arranged downstream.

Preferably in said transfer motion the elements to be transferred are moved in a motion integral with the transfer assembly, preferably translational, so as to maintain their own mutually ordered position.

Preferably, after the step c. of operating the gripping member in the collecting motion and, preferably after a counting step, if provided, the method may provide for separating the selected and/or counted elements by means of a separation assembly operated in a separation motion selected from the remaining part of the elements intended to be placed into the storage compartment.

The method may include particular aspects, which are described in detail below.

The method may provide, after step a., for arranging along a longitudinal direction a plurality of metal elongated elements, resting in a storage compartment and before the step c. of operating the gripping member, the storage compartment and, therefore, the bundle contained therein, is moved in a transverse direction up to the collecting area below the collecting member set up in said active position.

According to a particular aspect of the method, with regard to the step a. of preparing at least one storage compartment, the method may provide for arranging at least one further storage compartment, movable as well, thanks to an opening obtained in the fixed structure, extending longitudinally below the structure. This allows different types of elements to be available for further collecting cycles, which may be freely accessed simply by suitably moving the respective storage compartment in said collecting area. Usefully, the storage compartment and the additional storage compartment can be movable together.

With regard to the optional step of moving the storage compartment in the storage direction up to the collecting area, the method may include the further step of moving the storage compartment according to an regulation motion in the transverse direction, relative to the structure within the collecting area, if necessary, or in a programmed way, to evenly distribute the collection of the elements from the same storage compartment. The adjustment motion therefore advantageously avoids the formation of shrink marks in the bundle, which can compromise the productivity of the collecting cycles. In particular, the regulation motion permits to avoid the gripping member to do "empty" collections from these same shrink marks in the event that the elements are present in the storage compartment, but are accumulated outside said shrink marks.

Advantageously, the gripping member is of the magnetic type, so it can act on the elements to be collected with a respective first operating surface by magnetic attraction.

The step of selecting the desired number of elements, mentioned above, may take place by operating a selector member in a first selection step, following which a first number of elements, in particular which is not directly in contact with the magnetic grip, is removed from the attractive grip of the gripping member, and a second selection step, following which a second number of elements in excess is excluded from the interaction, in particular from the contact, with the selection member.

More precisely, said first selection step, preferably, takes place following a forward stroke, preferably through a translation motion which takes place parallel to a first operating surface of the gripping member, preferably at a suitable controlled distance between a support of the selector member and the first operating surface of the magnetic gripping member. This first selection step acts on the first number of elements in excess, preferably those collected elements which have been attracted, but which are not in direct contact with the operating surface of the gripping member. This action can take place, in particular, through the abutment of an abutment surface of the selector member, preferably present at an edge, in particular anterior one, of the selector member, according to the direction of said forward stroke. In practice, the first number of elements in excess is pushed away by the attractive grip of the gripping member by means of said abutment edge.

Said forward stroke of the selection motion preferably takes place in the transverse direction.

Advantageously, during the forward stroke the selector member can progressively intercept, by means of said abutment edge, in particular, the front edge, those elements which are not in direct contact with the magnetic gripping member, but which are magnetized in turn, that is removing the elements not directly in contact with the operating su rface.

Preferably, a single layer of elements, or a different number of layers may therefore remain interposed between the first operating surface of the gripping member and the support surface of the selector member, depending on said controlled distance and the transversal dimension of the elements in the collecting step.

In the active configuration, the selector member retains the selected elements with the support surface.

Preferably, the forward stroke of the selector member takes place between an inactive configuration, for example within the structure of the apparatus, and an active, extracted, moved forward outside the structure, configuration, according to a motion preferably in the transverse direction.

In particular, in the inactive configuration, the selector member is set back with respect to the gripping member in the direction of the selection motion.

In particular, in the active configuration the selection member is moved forward with respect to the fixed structure, at least of the gripping member, in the direction of the selection motion.

Said second selection step preferably takes place following a controlled return stroke of the selection member. This stroke preferably takes place between said preferably completely extracted configuration and an intermediate extracted configuration, selectively moved forward externally to the structure of the apparatus. Conveniently, by controlling the size of the portion of the selector member, extracted with respect to the structure in said intermediate extracted configuration, in particular with respect to the gripping member, it is possible to consequently control, as a function of the transversal dimension of the elements, the number of elements which may be housed resting on the selector member, held and interposed between the first operating surface of the gripping member and the supporting surface of the selector member.

Subsequently, after having brought the collected, possibly selected elements to the transfer height, the method may also comprise the further step of operating the transfer assembly according to an insertion motion to the transfer height in the transverse direction from a feeding configuration, interacting with the feeding path, to a receiving configuration, interacting with the gripping member and/or support means of the elements collected by the gripping member.

Advantageously, following said insertion motion, the elements are released to the transfer assembly and subsequently moved in a mutually integral way in the supply configuration by means of a transfer motion, thus maintaining an orderly arrangement of the same elements unchanged.

The method may include the further step of operating a counting assembly of any type comprising detection means configured to detect the passage of the elements actually transferred or preferably the weight of the elements inside the storage compartment. In this second case, the detection means provide processing means at least one datum relating to the weight of said elements before and after the transfer, to calculate, preferably at each operating cycle, the number of selected and/or transferred elements, on the basis of the transverse dimension of the elements. The weight detection in the storage compartment is particularly advantageous because it also allows monitoring the number of elements remaining in the same storage compartment, in order to correctly plan subsequent operations.

The separation motion mentioned above may occur at an intermediate height between the collecting height and the transfer height and/or substantially at the transfer height.

The method can further comprise the further step of pre-accumulating the released elements to the transfer assembly by means of a pre-accumulating assembly comprising at least one support member movable alternatively between a submerged position with respect to the transfer height, and a position emerged therefrom, active for lifting the elements from the support on the transfer assembly.

The method may also provide, for example after the selection action of the selector member, if provided, or after a support action exerted by support means comprising a support surface for the collected elements, for operating said gripping member in a disengagement motion, from said active position to an inactive position, retractable in the structure.

In this case, the method may further provide for operating the gripping member in a conversion motion, to change the function of the same member into a support member of the collected elements. The conversion motion comprises a first stroke, wherein the gripping member is moved from the inactive position, retractable in the structure, to a lower height than the upper collecting height, therefore substantially lower than the selector element, if provided, or to said support means, and a second supporting stroke, wherein the same gripping member is extracted externally to the structure, from the inactive position to the active position, to intercept the collected elements by means of a respective second upper operating surface.

After, the method may provide for retracting the selector member or said support means, thus releasing the collected elements on the second operating surface of the gripping member, opposite to the first operating surface.

The method may then provide for moving the gripping member in a lifting motion, from the collecting height to the transfer height or, more precisely to a height substantially equal to or greater than the transfer height, to release the collected elements to the transfer assembly.

The apparatus for collecting and feeding metal elongated elements, according to the invention, includes:
- a fixed structure developing along a longitudinal direction, having in a preferably substantially central position of the same extension a gripping member operating in an active position for collecting elements from a storage compartment, configured to receive a plurality of elements resting along the longitudinal direction and arranged at a collecting area below the gripping member in the active position, the gripping member being operable in a collecting motion in a lowering stroke to a collecting height and in a lifting stroke from the collecting height at a higher height;
- a transfer assembly movable in a transfer motion to a transfer height, for transferring the collected elements to a feeding path arranged downstream.

The apparatus is very compact and, by associating the collection and the transfer to the downstream feeding path, the path that the elements must travel from the storage compartment to the feeding path is in the same way compact and reduced. All this takes place to the advantage of the times for each collecting and transferring cycle and therefore of the productivity.

Furthermore, the elements are easily transferred to the feeding path, preferably by rollers, thanks to the transfer assembly associated with the same fixed structure. This provision allows the easy and orderly transfer of a large number of elements, again to the advantage of the productivity.

The gripping member can preferably act in a substantially central position of the apparatus. In this way, thanks to the aid of said transfer assembly, it is possible, in a very easy way, to handle the collected elements and perform the feeding operations from the elements to further operations, in particular with the aid of a roll feeding path.

According to a particular aspect of the invention, the transfer assembly is capable of orderly transferring the received elements to the feed path, in the transfer motion.

Preferably, said transfer motion is a translation motion, in which the collected elements are moved integrally with the transfer assembly towards the feeding path, so as to maintain their orderly structure unchanged.

Preferably, the transfer assembly comprises transfer members which may be operated to transport the collected elements in an orderly manner.

The transfer members are preferably, but not exclusively, made by means of flexible, for example closed-loop, transmission means, wound around opposed pulleys. It is possible, by rotating said pulleys, for example, to orderly transport of said elements.

In particular, the removed elements may be usefully arranged in an orderly arrangement, which is maintained following the transfer motion.

The apparatus preferably includes a separation assembly operable in a separation motion to separate the elements collected from the remaining part of the elements present in the storage compartment. Following this separation step, the collected elements are advantageously arranged in an orderly manner.

The separation assembly can act at said upper portion, at which the collected elements are retained by the gripping member, or, alternatively or in addition, to the transfer portion, in which the transfer assembly is operative.

The gripping member preferably collects the elements with a respective first operating surface, preferably the lower one, by means of magnetic attraction.

The apparatus preferably comprises counting and/or selection means to select a desired number of elements from the elements collected from the gripping member.

For this purpose, the apparatus preferably comprises a movable selection member according to a first selection step, following which a first number of elements in excess is removed by pushing it away from the attractive grip of the gripping member.

The selector member can also be movable in a second selection step, following which a second number of elements in excess is excluded from the interaction with the selector member.

Preferably, the selector member is operative at said upper height.

The selector member is preferably movable in a forward translation stroke parallel to said first operating surface of the gripping member, preferably at a controlled distance between a support surface of the selector member and the aforementioned first operating surface, acting by means of an abutment edge of the selector member and in a controlled return stroke.

Said controlled distance may be substantially equal to a multiple of a transversal dimension of the elements, preferably equal to a distance comprised between one and two times a transversal dimension of the elements being collected, so as to remove the elements distant from the first operative surface, i.e. not directly in contact with it.

The gripping member is preferably movable with a disengagement motion, from said active position to an inactive position, conveniently retracted in the structure.

Following this disengagement motion, the collected and possibly selected elements can be released to rest on the selector member, if provided, or on equivalent support means, arranged at said upper height, below the first operating surface of the gripping member.

According to a preferred solution, the gripping member preferably has a second operating surface, opposite to the first operating surface, to replace the support of the elements collected and possibly selected by the selector member, if provided.

In this replacement of the support function, the gripping member preferably cooperates with the selector member, if provided, or with equivalent support means, configured to intervene to support the elements collected by the gripping member through the first operating surface. Preferably, this replacement takes place at said upper height.

To make this replacement, the gripping member is preferably movable with a conversion motion, following which the gripping member converts its function, transforming itself into a support member. In other words, following said conversion motion, the removed elements can be supported resting on the second operating surface of the gripping member.

Preferably, said conversion motion comprises a first stroke, in which the gripping member is moved from the inactive position, in which it is arranged, following the aforementioned disengagement motion, retractable into the structure of the apparatus at the upper height, at a height lower than said upper height, and a second support stroke, in which the gripping member is extracted externally to the structure, preferably in a horizontal direction, so as to intercept the collected elements from below.

As soon as the collected elements rest on the second operating surface, the selector member or equivalent support means is also movable with a retraction motion, preferably concealed within the structure of the apparatus, to release the collected elements on the second operating surface of the gripping member.

The gripping member is also preferably movable by a lifting motion to bring the collected elements from the higher height to a height substantially equal to or, preferably, slightly higher than the transfer height.

Alternatively, according to a different solution, it is possible to provide that the same selector member or said equivalent support means, are operated according to the further lifting motion, to bring the collected elements from the upper height to the transfer height or, preferably, to a slightly higher than the transfer height.

According to a particular aspect, relating to the collecting function of the collecting member, it is possible to provide that, in particular if there is a fixed storage compartment, the collecting assembly is movable with a regulation motion according to a transversal direction, at the collecting height, to be positioned with respect to the elements present in the storage compartment, so as to collect them in an evenly distributed manner.

The transfer assembly is preferably movable according to an insertion motion at the transfer height in a transverse direction from a feeding configuration, at which it interacts with the feeding path, to a receiving configuration, at which it interacts with the gripping member and/or support means of the elements collected by the gripping member.

Preferably, at the transfer height, the collected elements can be released, for example by lowering the gripping member or equivalent support means provided, as described above, resting on the transfer assembly. This release may therefore take place, advantageously, while maintaining the orderly structure of the released elements.

The apparatus can also provide a pre-accumulation assembly cooperating with the transfer assembly and comprising at least one support member which can move alternately between a submerged position with respect to the transfer height, and a position emerging therefrom, active to lift the elements from the support on the transfer assembly.

The apparatus preferably comprises a counting assembly of any type comprising detection means configured to detect the passage of the elements actually transferred or, preferably, the weight of the elements inside the storage compartment. In this second case, the detection means provide at least one datum to the processing means relating to the weight of said elements before and after the transfer; to calculate, on the basis of the transversal dimension of the elements, preferably at each operating cycle, the number of selected and/or transferred elements. The weight detection in the storage compartment is particularly advantageous because it also allows the monitoring of the number of elements remaining in the same storage compartment, in order to correctly plan subsequent operations.

According to a particular aspect of the invention, it is possible to provide that the storage compartment is made movable, for example on wheels, to be arranged in the collecting area.

According to a further particular aspect of the invention, it is possible to provide that the structure of the apparatus also includes an opening extended along the longitudinal direction, made below the structure to house at least one further movable storage compartment in a rest configuration.

The presence of said opening can allow, in particular, different mobile storage compartments, in which different types of elements can be deposited, from which to draw in successive cycles of collecting and feeding.

According to a particular aspect, the structure holding the collecting and transfer means can therefore be fixed with respect to housing compartments configured to be movable. Thanks to this provision, the elements can be collected and transferred without resorting to costly handling necessary to bring the operating assemblies to different storage compartments.

The apparatus according to the invention may in this case comprise actuation means for activating in motion the storage compartment or the mobile storage compartments, according to a transversal adjustment motion, relative to the structure, within the collecting area, if needed or in a programmed way, to evenly distribute the collection of the elements.

According to an advantageous version of the apparatus, the fixed structure is made as a bridge, said opening thus passing through to allow the passage or housing of the storage compartment or an additional storage compartment and therefore to have the availability, for subsequent cycles of collection, of further elements, possibly of a different type.

### Description of drawings

The details of the invention will become more evident from the detailed description of a preferred embodiment of the apparatus for collecting and feeding elongated elements, as well as of the method implemented by the same apparatus, shown for illustrative purposes in the accompanying drawings, wherein:
Figures 1, 2, 3, 3a, 3b, 4, 5, 6, 7, 8, 9, 10, 11, 12, 13, 13a, 14, 15, 16, 17, 17a, 18, 18a, 18b show respectively the apparatus for collecting and feeding metal elongated elements in a perspective or side view, in different successive operating steps;
Figures 19, 19a show respectively a front and side view of the apparatus according to the invention, in a second embodiment;
Figure 20 shows a side view of the apparatus according to the invention in a third embodiment;
Figure 21 shows a rear view of the apparatus according to the invention in a fourth embodiment;
Figure 22 shows a side view of the apparatus according to the invention in a fifth embodiment.

### Best mode

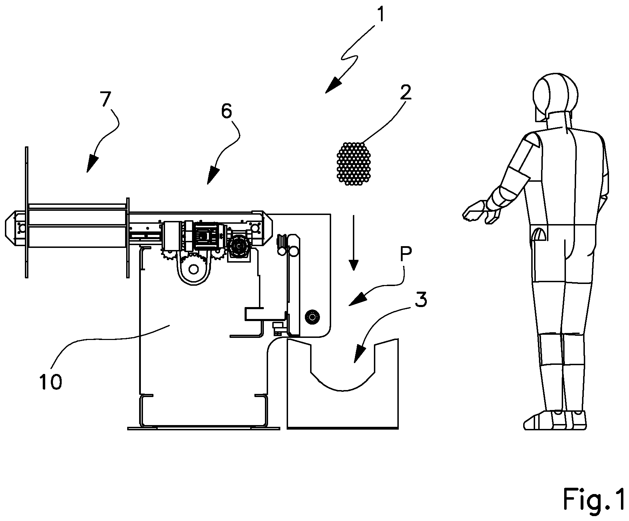

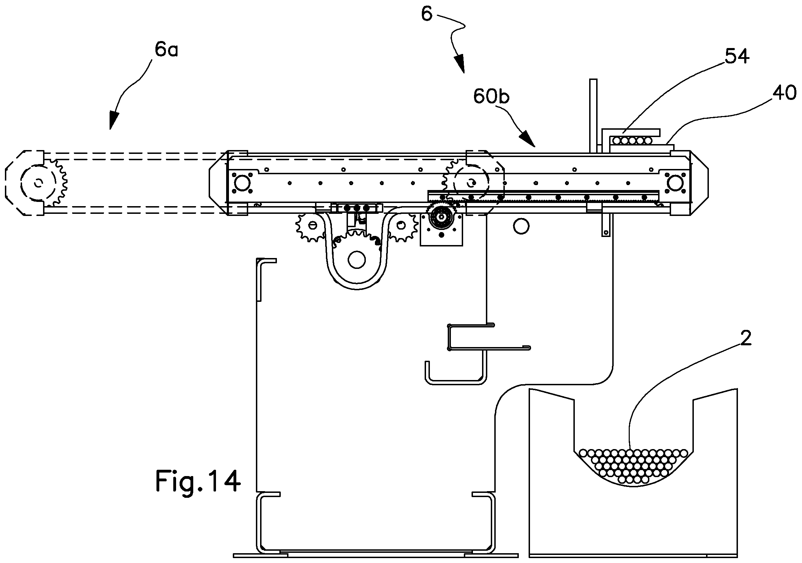

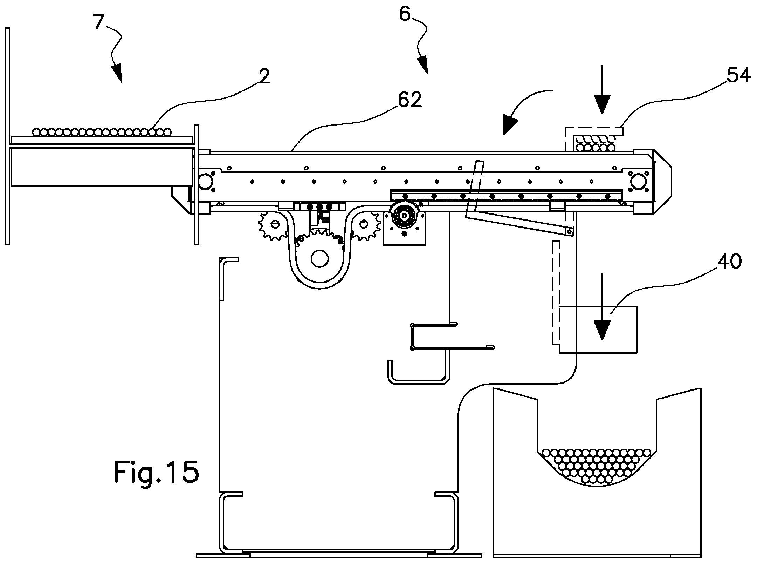

With particular reference to Figures 1 - 18b, the reference number 1 indicates an apparatus for collecting and feeding metal elongated elements 2, in particular metal profiles and rods.

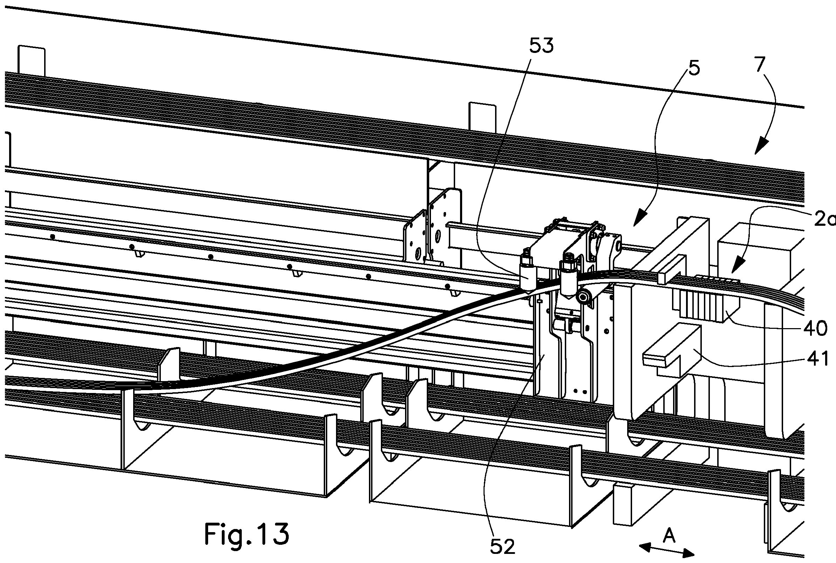

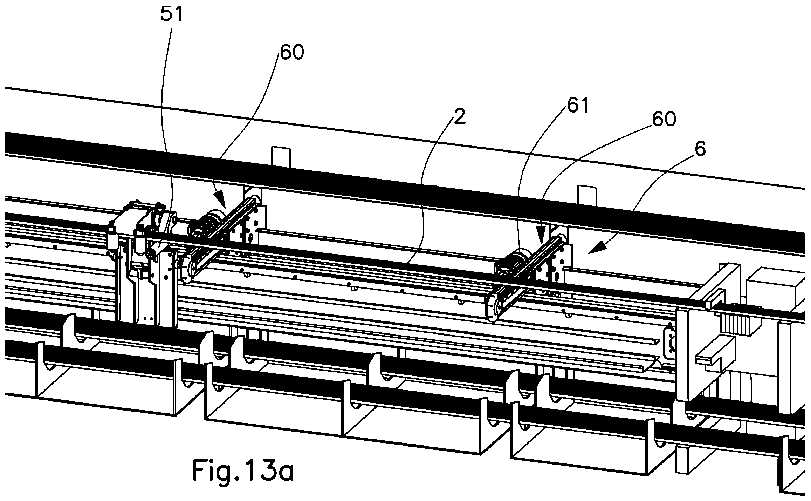

The apparatus 1 comprises at least one storage compartment 3 on which the elements 2 can be arranged, preferably resting along a longitudinal direction A (see for example Figure 13).

In particular, the elements 2 can come from a grouping in bundles and can be positioned in various ways within the respective compartment 3, for example after being lifted from a respective storage arranged on the ground.

The elements 2 can assume a random configuration inside the storage compartment 3, therefore disordered, for example partially intertwined, once the bundle is released from respective binding means. The degree of interweaving of the elements 2 can be directly proportional to the flexibility of the elements 2, therefore for example to the respective length or, more precisely, to the ratio between the length and the diameter or the transverse dimension of the same elements 2.

in order to collect a part of the elements 2 present in the original bundle, these are preferably separated, therefore disentangled, from the elements 2 intended to remain, at least temporarily, in the storage compartment 3, only to be collected, if necessary, in one or more further collecting cycles. This operation can be the more difficult the greater the degree of intertwining of the same elements 2 is within the compartment 3.

In particular, the difficulty of disentangling, therefore of separation from the bundle, can be influenced by the possible presence, on the external surface of the elements 2, of ribs or other conformations, which make mutual sliding difficult.

The storage compartment 3 is arranged at a collecting area P, to allow the removal of the elements 2 contained therein.

More precisely, the collecting area P is an area below the operating members of the apparatus 1, wherein the same operating members can carry out at least one collecting cycle of the elements 2, as described in detail below (see Figure 1).

To carry out the operations of collecting and feeding of elements 2, in particular of a desired number of them, the apparatus 1 therefore comprises a series of operating assemblies held by a structure 10.

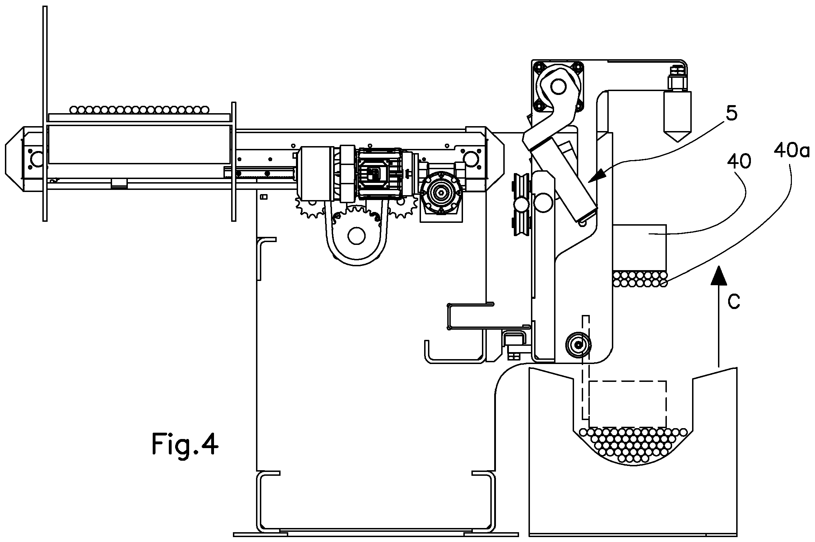

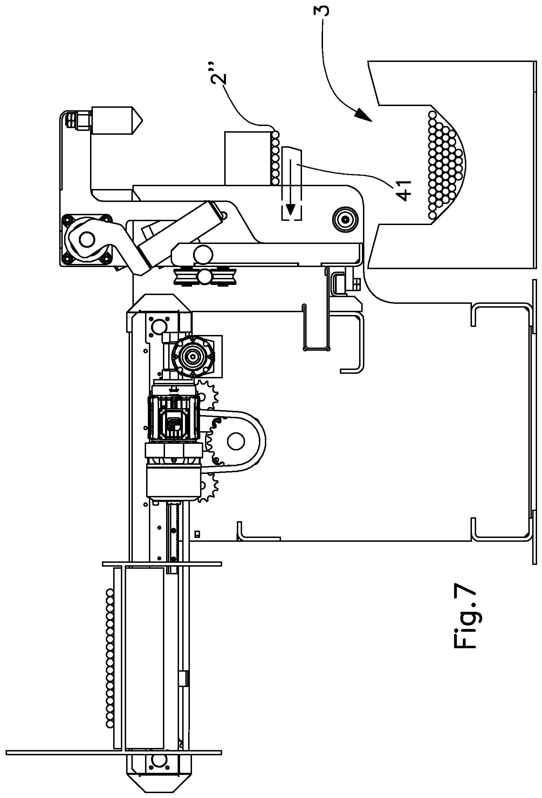

The apparatus 1 also includes a gripping assembly 4 (Fig. 7) of the elements 2 collected from the storage compartment 3 and, preferably, a separation assembly 5 (see for example Figure 4) cooperating with the gripping assembly 4 to separate said selected elements 2 from the other elements 2 intended on the contrary to remain, in a respective operating cycle of collection, inside the storage compartment 3.

The apparatus 1 can usefully also comprise a transfer assembly 6 (Fig. 1) of the selected elements 2 and a feeding path 7 downstream of the transfer assembly 6.

The gripping assembly 4 is for example advantageously arranged in an intermediate position, preferably in a central position, with respect to the longitudinal development of the apparatus 1 (see for example Fig. 13).

In particular, the gripping assembly 4 can preferably be carried centrally by said structure 10 so as to be arranged centrally with respect to the longitudinal development of the elements 2 to be collected, arranged in the storage compartment 3.

More precisely, in the aforementioned collecting position, the storage compartment 3 is positioned below the gripping assembly 4 to allow collection of the elements 2 arranged therein.

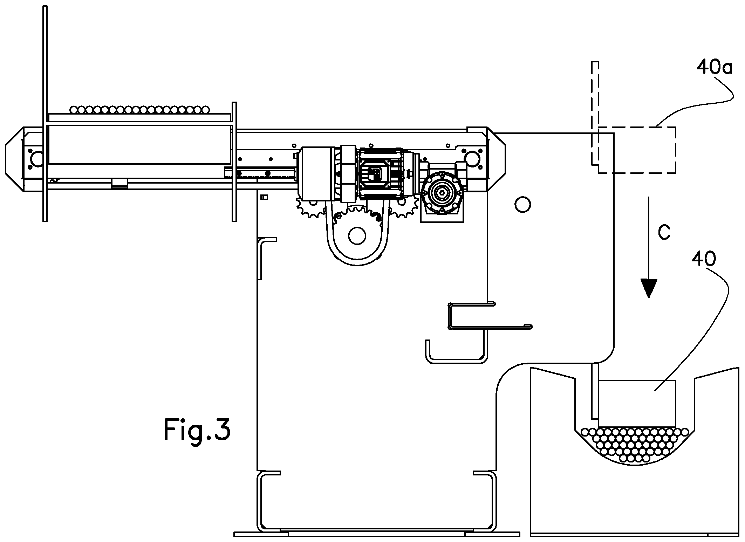

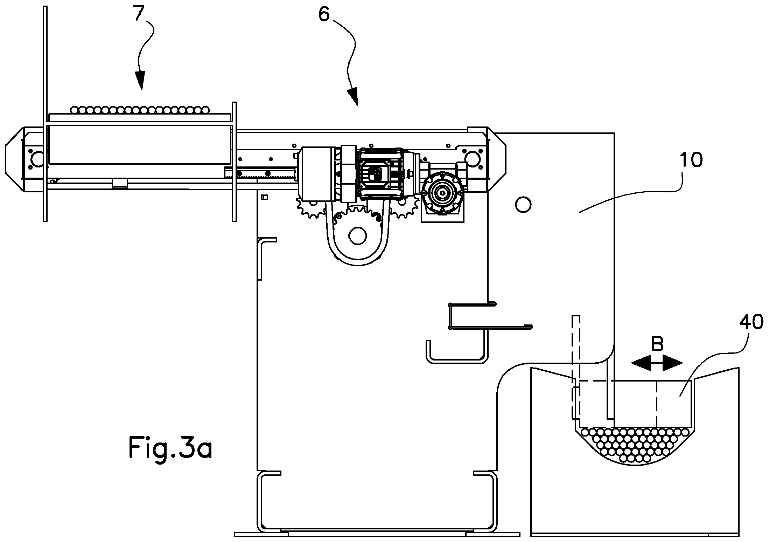

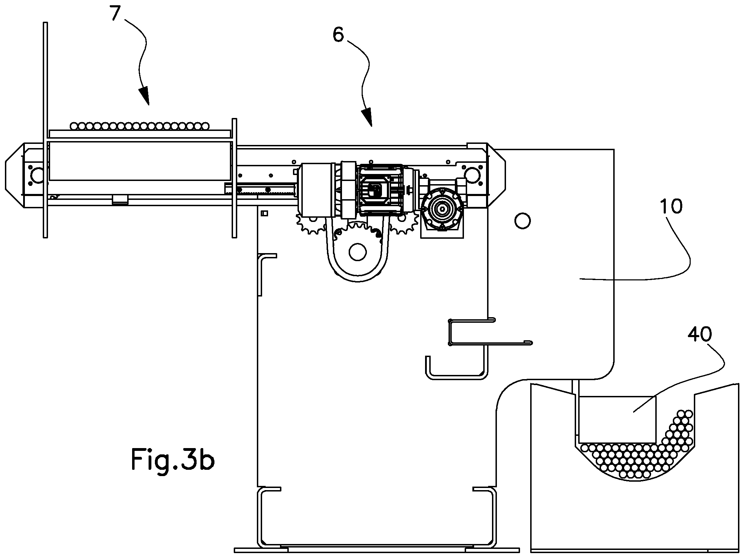

The gripping assembly 4 comprises a gripping member 40 (Fig. 3) which is magnetic and, preferably, a selector member 41 (Fig. 7) cooperating to take a desired number of elements 2 from the storage compartment 3, in particular, which is not greater than the number of elements 2 to be fed to the feeding path 7. Alternatively, the gripping assembly 4 comprises, in addition to the gripping member 40, support means cooperating with it to support, at least temporarily, the collected elements 2.

More precisely, the cooperation between the gripping member 40 and the selecting member 41 makes it possible to effectively select the desired number of elements 2, which is normally lower than the generally indeterminate number of elements 2 that may be collected by the magnetic action exerted by the gripping member 40.

Basically, the selector member 41 performs a filter function of the elements 2 attracted by the gripping member 40.

More precisely, the gripping member 40 is for example made by means of a preferably permanent magnet, or by means of an electromagnet. Alternatively, the gripping member 40 can be made by means of an equivalent gripping member.

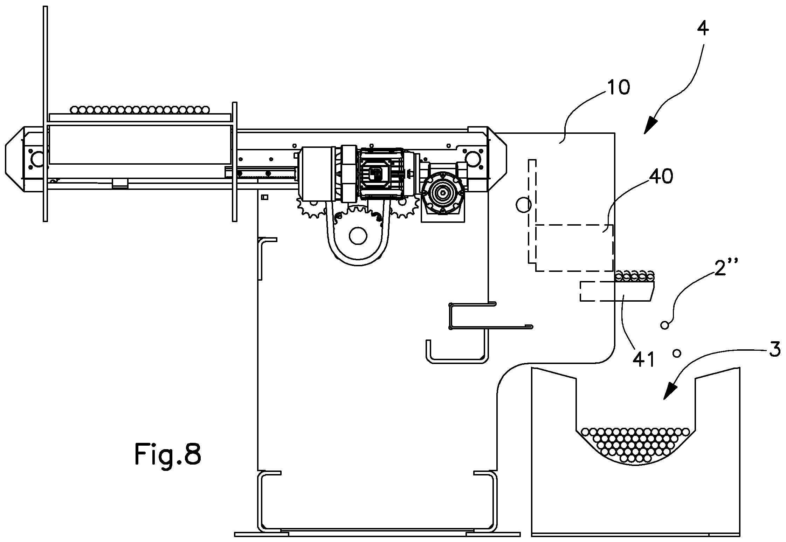

The gripping member 40 is movable with an activation motion from an inactive position, retractable inside the structure 10 to an active position, moved forward externally to the structure 10 and with a disengagement motion, returning from the active position (see Fig. 8).

Said activation motion, like the disengagement motion, is preferably a translation motion, in particular a substantially horizontal translation, of the gripping member 40.

The gripping member 40 comprises a first operating surface 40a, which is preferably flat, facing, in said active position, towards the storage compartment 3 arranged in the collecting position, and preferably oriented horizontally.

The gripping member 40 is also movable with a collecting motion, along a collecting direction C, preferably substantially vertical (see Figure 4).

This collecting motion may occur, for example and without limitation, by means of a translation motion. Alternatively, this gripping motion can take place, for example, by means of a rotational motion or a suitable combination of a translation motion with a rotational motion.

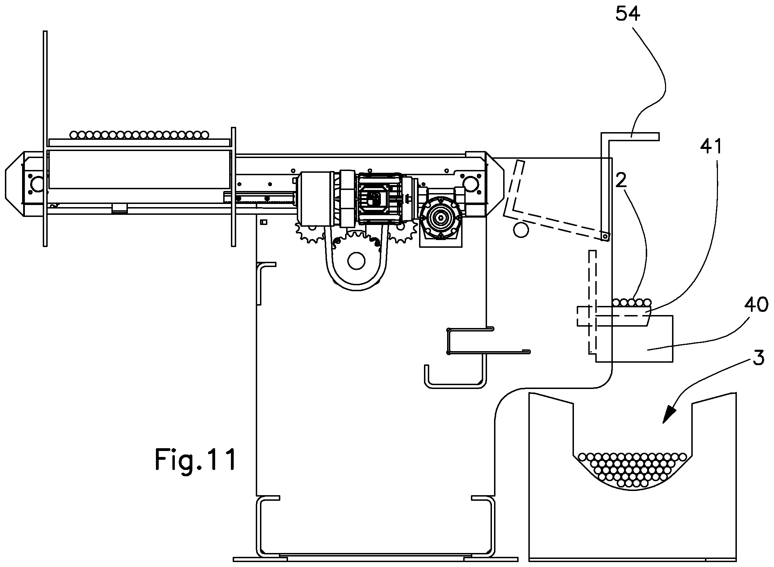

Said collecting motion preferably comprises a lowering stroke from an operation height, for example corresponding to the active position mentioned above, to a collecting height, lowered into the storage compartment 3 arranged in the collecting position (see Figure 3 ), to attract the elements 2 to itself at a gripping portion 2a (see for example Figures 11 and 13), preferably central with respect to the longitudinal development of the elements 2, and a lifting stroke, from said collecting height at a higher height, corresponding for example to the operation height, or at an even higher transfer height, as described in detail below, or at an intermediate height (see Figure 4).

The gripping member 40 can also be advantageously provided with a regulation motion in a transverse direction B, which is preferably horizontal, for collecting the elements 2 from the storage compartment 3 evenly (see Figures 3a and 3b). Usefully, the gripping member 40 can be moved in said adjustment motion at the collecting portion.

Following said collecting motion, the gripping member 40 lifts the aforementioned gripping portion 2a of the elements 2 collecting them from the storage compartment 3.

Preferably the first operating surface 40a of the gripping member 40 is a lower surface, in use, and therefore it acts from above on the gripping portion 2a of the elements 2.

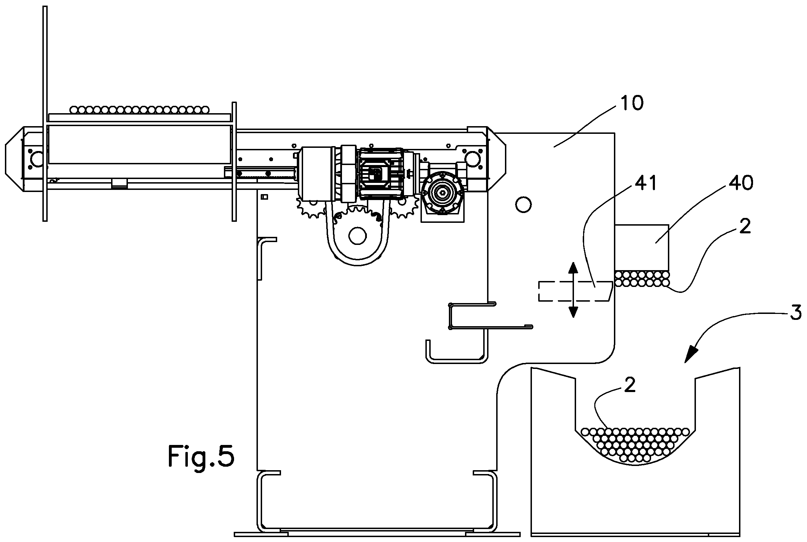

The selection member 41 is preferably made in the form of a support member, therefore for example of a shelf, being movable at least by a selection motion (see Figures 5 - 8).

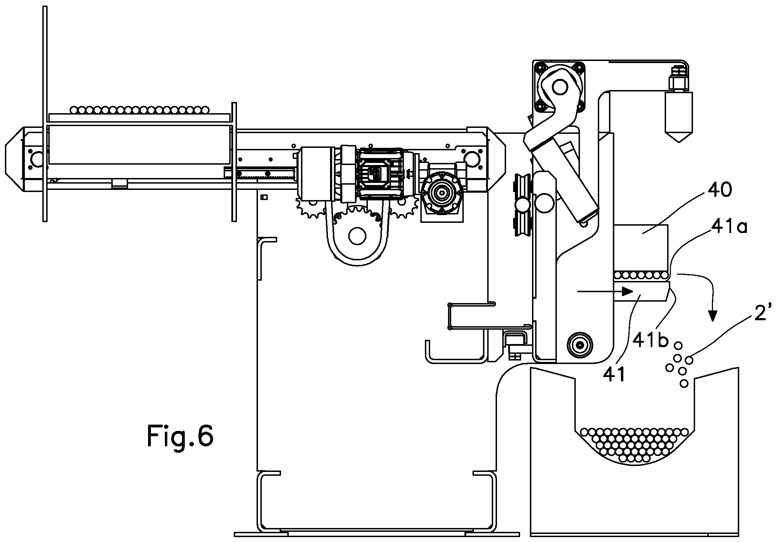

More precisely, the selector member 41 comprises a support surface 41a, which is preferably flat, facing in use said first operating surface 40a of the gripping member 40, and an abutment surface 41b (see Figure 6), for example distinct from the support surface 40a and arranged at the front, operative in a first selection step, as described in detail below.

Said selection motion can in fact preferably take place in two steps: a first selection step, following which a first number of elements 2' in excess is removed from the attractive grip of the gripping member 40, and a second selection step, as a result of which a second number of elements 2" in excess may be excluded from the collection carried out by the cooperation between the gripping member 40 and the selector member 41 (see Figures 5 to 8).

More precisely, said first selection step may take place following a respective forward stroke of said selection motion, while the second selection step may occur following a controlled return stroke of the same selection motion.

In particular, in said forward stroke of the selection motion, the selector member 41 is preferably movable parallel to the first operating surface 40a, at a controlled distance therefrom, from an inactive configuration within the structure 10 to an active, moved forward configuration externally to the structure 10, and facing the gripping member 40 arranged in the active position at the height reached following the lifting stroke.

Said forward stroke of the selection motion preferably occurs in the transverse direction B.

In practice, during the forward stroke of the selection motion, the selection member 41 can progressively intercept, by means of the aforementioned abutment surface 41b, the first number of elements 2' in excess, removing them from the attractive grip of the gripping member 40, in practice by moving them away from the first operative surface 40a.

At the same time, the elements 2 retained by the gripping member 40 are interposed between the first operating surface 40a and the support surface 41a of the selection member 41, in a number of layers determined by said controlled distance.

A relative adjustment motion may be provided between the selector 41 and the gripping member 40, preferably in a substantially orthogonal direction to the first operating surface 40a of the gripping member 40. The selector member 41 is arranged, through this motion, at said controlled selection distance, with respect to the gripping member 40.

Following this adjustment motion, the distance between the support surface 41a and the first operating surface 40a is in fact controlled, for example advantageously as a function of the transverse dimension of the elements 2 to be collected. More precisely, said distance determines the number of layers of elements 2 placed side by side, interposed, therefore retained, between the first operating surface 40a and the support surface 41a, at the end of the forward stroke of said selection motion of the selector member 41.

In practice, at said controlled distance the selector 41 can perform its own selection or filter function, leaving a single layer of elements 2 in grip with the gripping member 40, determined by the controlled distance reached following said adjustment motion.

This distance may advantageously be chosen substantially equal, better a little higher, to the transverse dimension of the elements 2 to be collected, to hold a single layer of elements 2 by means of the attractive grip of the gripping member 40.

In practice, this controlled distance may be advantageously chosen equal to a distance between one and two times the transverse dimension of the element 2, so as to retain a single layer of elements 2 by means of the attractive grip of the gripping member 40.

In other words, this condition allows the removal from the attractive grip of the gripping member 40 of any element 2 that is not directly in contact with the operating surface 41a, selecting instead a single layer of directly attracted elements 2.

Said controlled return stroke of the selection motion may instead take place between said active configuration, at which the selector member 41 is moved forward externally to the structure 10 at least as much as the gripping member 40, and an intermediate extracted configuration, moved forward externally in selective manner.

In practice, by controlling the advance of the intermediate extracted configuration with respect to the gripping member 40 it is possible to consequently control, as a function of the transverse dimension of the elements 2, the number of the same elements 2 held and interposed between the first operating surface 40a and the support surface 41a.

The gripping member 40 is finally preferably movable with a disengagement motion (see in particular Fig. 8), preferably according to a return stroke of said activation motion, along said transverse direction B.

In practice, the gripping member 40 can be movable, in said disengagement motion, from said active position to said inactive position, retractable in the structure 10, preferably by means of a substantially horizontal translation motion.

In said disengagement motion, the structure 10, or part of it, preferably acts as an abutment for the elements 2 selected by the selector 41, thus favoring the detachment of the same elements 2 from the gripping member 40. The selected elements 2 may therefore remain in support, in this step, on the support surface 41a of the selector member 41.

In other words, in said disengagement motion, the structure 10 blocks the selected elements 2, thus causing a relative tangential sliding between the first operating portion 40a of the gripping member 40 and the elements 2. This relative sliding allows the gradual detachment of the selected elements 2, as the force necessary to counteract the magnetic attraction is minimal in the tangential direction. In this step, the second number of elements 2" in excess, which do not find space to rest on the underlying shelf, fall into the underlying storage compartment 3 (see in particular Figures 7 and 8).

It should be noted that thanks to the selection action carried out by the selector member 41 and the disengagement action of the gripping member, the selected elements 2 are arranged to rest on the selector member 41 in an ordered configuration at least at the gripping portion 2a. This means the configuration at which the elements 2 are arranged substantially aligned, preferably in a single layer, as well as substantially equidistant, in particular side by side.

The gripping assembly 4 may be associated, according to a further embodiment of the invention, which is otherwise quite similar, to a counting assembly preferably integrated or associated with the storage compartment 3.

The counting assembly includes detection means configured to detect the weight of the elements 2 placed inside the storage compartment 3.

Thanks to said detection means it is possible, at each collecting cycle operated by the gripping assembly 4, to trace the number of elements 2 actually collected by processing the detected data and starting from the dimensional characteristics of the elements 2, hence the weight of the single element 2 present in each compartment 3. More precisely, it is possible to trace this number by difference with respect to the weight of the elements 2 remaining in the storage compartment 3. Alternatively, a known counting device of a different type can be located near the upper part of the central section of the structure 10.

Preferably, following said collecting motion, at the end of the lifting stroke, the selected elements 2 are located at a lower height than the transfer height, in which the aforementioned transfer assembly 6 works. The gripping assembly 4 or part of it can also be movable by an elevator motor, to bring the same elements 2 above the aforementioned transfer height.

This lifting motion can affect the selector member 41, the gripping member 40 or both members. In the latter two cases, for example, it is possible to provide that the gripping member 40 is activated in said disengagement motion in the appropriate step with respect to the lifting of the elements 2 collected at the transfer height.

The lifting motion can preferably be a vertical translation motion, or any other motion suitable for the purpose.

In any case, following the lifting motion, above the transfer height, the gripping portion 2a of the selected elements 2 is in an ordered configuration resting on a suitable support member.

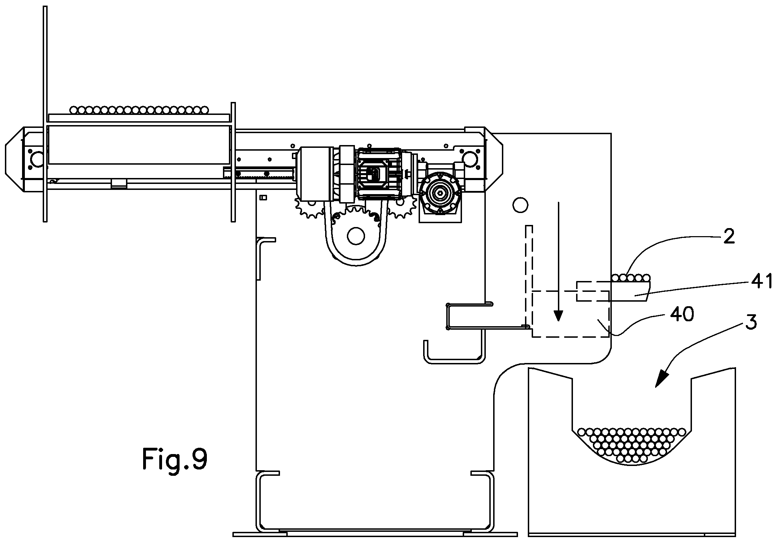

According to a preferred solution, shown in Figures 9 - 12, the gripping member 40 preferably has a second operating surface 40b, opposite the first operating surface, to replace the support of the collected elements 2, operated by the selector member 41 or, in its absence, by equivalent support means.

In practice, the gripping member 40 preferably cooperates with the support surface 41a of the selector member 41, if provided, or with said equivalent support means, configured to intervene to support the elements collected by the gripping member through the first operating surface 40a. Preferably, this replacement takes place at said upper height.

For this purpose, the gripping member 40 is preferably movable by a conversion motion, following which the gripping member 40 converts its function, transforming itself into a support member. In other words, following said conversion motion, the collected elements 2 may be supported resting on the second operating surface 40b of the gripping member.

Preferably, said conversion motion comprises a first stroke, in which the gripping member 40 is moved from the inactive position, in which it is found following said disengagement motion, which disappears into the structure 10 of the apparatus 1, at a height lower than the height in which said support surface 41a is located, and a second support stroke, in which the gripping member is extracted externally to the structure, preferably in a horizontal direction, so as to intercept the collected elements from below.

The selector member 41 or equivalent support means are also movable with a respective deactivation motion, alternatively between the active, extracted configuration and the inactive configuration, preferably concealed within the structure 10, in particular to release the collected elements 2 on the second operating surface 40b of the gripping member 40.

The gripping member 40 is also preferably movable by said lifting motion to bring the collected elements 2 to a height substantially equal to or, preferably, slightly higher than the transfer height.

The gripping member 40 is also equipped with a release motion, preferably lowering from the transfer height, in order to release the selected elements 2 to the transfer assembly 6, as described in detail below.

The separation assembly 5 of the apparatus 1 separates the selected elements 2 from the remaining elements 2 in the storage compartment 3, preferably at the transfer height, gradually lifting the sections of the selected elements 2 to the same height, acting on them in the longitudinal direction A, starting from the gripping portion 2a, preferably on each side of the same portion. At the end of the separation operation, therefore, the selected elements 2 are arranged extended along a substantially horizontal direction (see in particular Figures 13 and 13a).

Alternatively or in addition, the same separation assembly 5 or a further separation assembly can operate at an intermediate height. In this case the separation of the selected elements 2 is easier, since the selected elements 2 are bended, by virtue of their own weight, to a lesser extent. Therefore, the lifting stroke, necessary to gradually extend, from the bended condition, the sections of the elements 2, is also reduced.

The separation assembly 5 comprises at least one separator member 51, preferably arranged on each side to the side of the gripping assembly 4.

Each separator member 51 is movable by a separation motion along the longitudinal direction A and, preferably, with a coupling motion, to engage at the bottom of the selected elements 2 and perform said separation.

Said separation motion is preferably a translation motion.

The separator member 51 is movable with said engagement motion between a spaced position, preferably retractable within the structure 10, and an engaged position, at which each separator member 51 is oriented in a substantially horizontal way, to locally support the 2 selected items.

The aforementioned engagement motion can be, for example, a rotational motion or a translation motion between said positions, or a combination of said motions.

The separator member 51 is preferably made by means of a roller mounted rotating around a respective rotation pin, so as to reduce the friction between it and the elements 2 during the separation motion.

Each separator member 51 may be mounted on a respective movable frame 52, held by the structure 10 and sliding thereon from a position close to the gripping assembly 4 to a spaced position, such as to intervene to support the end of the elements 2 to be separated (see Figures 13, 13a).

The movable frame 52 can also comprise at least one abutment member 53, preferably in the form of a roller, designed to abut the selected elements 2 laterally to keep them laterally during the separation motion.

As previously said, if, in particular, the lifting stroke of said collecting motion of the gripping assembly 4 brings the elements 2 to an intermediate height between the transfer height and the collecting height, then it may be advantageous to provide for operating a first separation of the elements 2 selected from the bundle from which they were collected. This first separation can be carried out by the separation assembly 5, also movable in the vertical direction to reach then the transfer height, or by the further separation assembly mentioned. This additional operation may be appropriate, in particular in cases where the elements 2 are very tangled.

To facilitate the separation operations, the separation assembly 5 and/or the further separation assembly can be associated with a locking member 54, for example made by means of a bracket or a pliers, preferably arranged alongside the gripping assembly 4. Alternatively or in addition, a locking function may be performed, in cooperation, by the gripping member 40 and by the selector member 41.

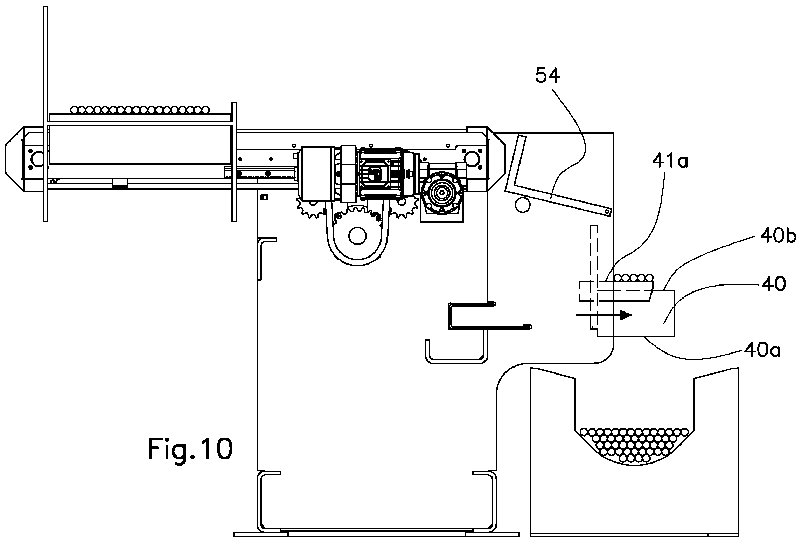

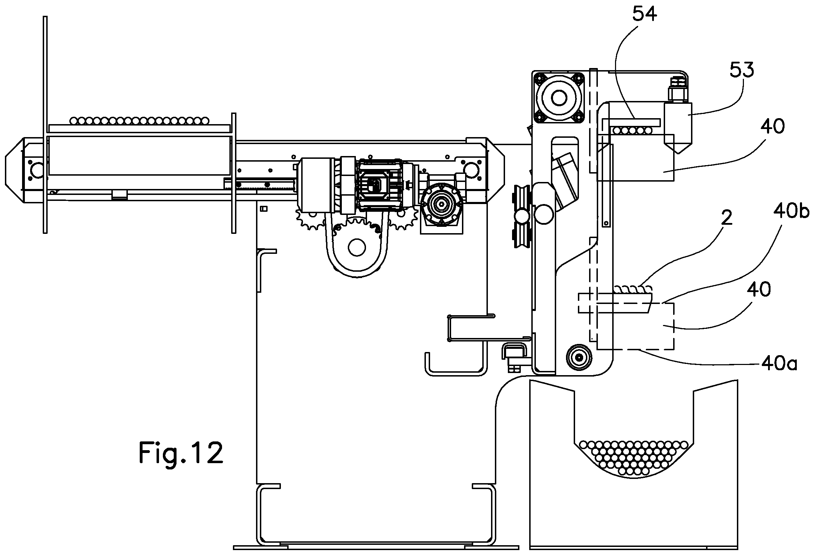

The locking member 54 is preferably movable with a locking motion, alternatively between a resting position (see Figure 10), at which it is spaced from the collected elements 2, and a locking position (see Figure 12), at which it intercepts the elements 2, blocking them.

In the locking position, in particular, the locking member 54 can cooperate with the gripping member 40 acting as a support, to tighten the elements 2.

Said locking motion can be achieved for example by means of a rotational motion, as in the case shown in the figures. In this case, the locking member 14 is preferably hinged to the structure 10, to rotate alternately between the mentioned resting and locking positions. Alternatively, the locking motion can be achieved with a translation motion or a combination of a rotary motion and a rotational motion.

The transfer assembly 6 comprises at least one transfer member 60, movable at the transfer height, of an insertion motion alternately between a feeding configuration 60a, retreated in the direction of the feeding path 7 to interact with it, and a receiving configuration 60b, advanced, at which it is capable of receiving the elements 2 from the gripping and selection assembly 4, in particular from the selector member 41 arranged above the transfer height (see Figures 13a, 14, 15 and 16).

Preferably, the transfer assembly 6 comprises a plurality of transfer members 60, distributed for each side of the gripping member 40, which can preferably be activated in succession along the longitudinal direction A, in said insertion motion, in a suitable step relationship with respect to the separation motion of the separation assembly 5, by means of actuation means 61.

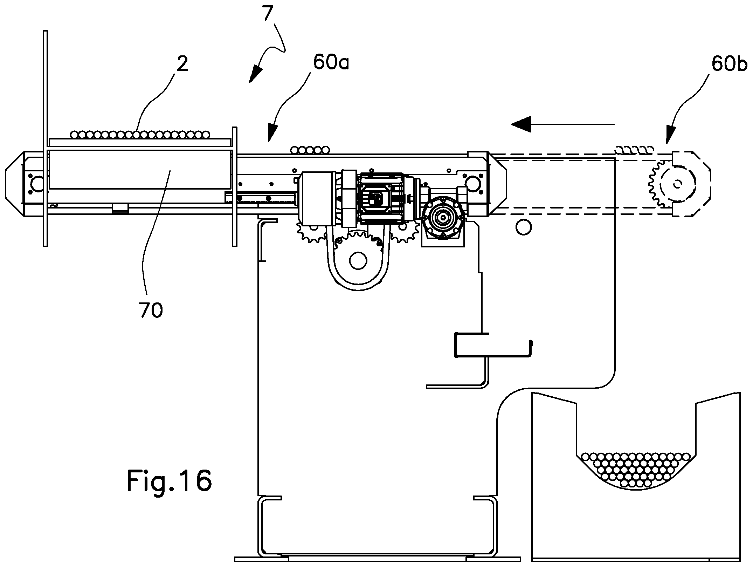

Each transfer member 60 is also movable with a transfer motion, to neatly transfer the elements 2 received at the feeding path 7 preferably in a translation motion along the transverse direction B which maintains ordered arrangement thereof (see for example Figure 16).

More precisely, each transfer member 60 is preferably made by means of flexible transmission means 62, for example a chain or a closed belt, wound around opposing pulleys, which may be operated in a known way by means of a respective motor member. Said transmission means 62 define a closed path provided with an active upper branch and an inactive lower branch. Said means can therefore orderly transfer the elements 2 received in support on the respective upper branch, by activating drive means of a known type. This transfer therefore takes place, essentially, without causing sliding or rolling of the elements 2, in practice through a motion of the elements 2 integral with the transfer means.

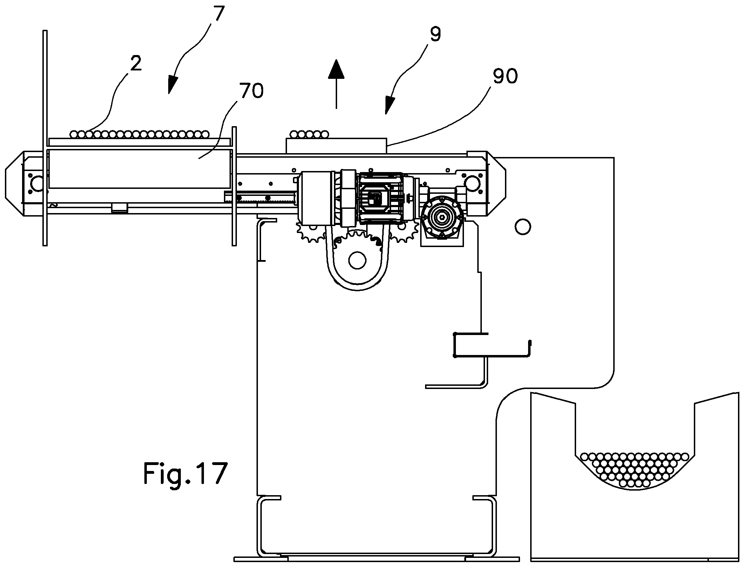

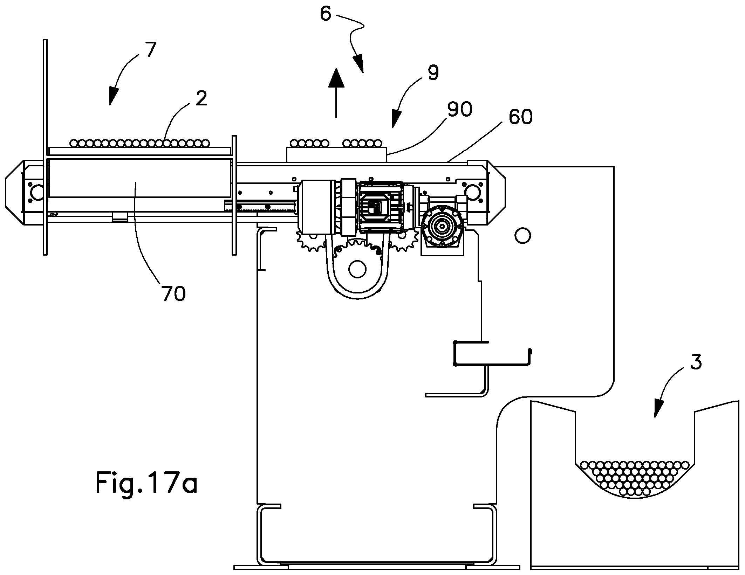

The transfer assembly 6 can also comprise a pre-accumulation assembly 9 (see Figure 17).

The pre-accumulation assembly 9 can serve to accumulate groups of selected elements 2 at each operating cycle of the gripping assembly 4, up to a desired number of elements 2, so that they can then be transferred together to the feeding path 7.

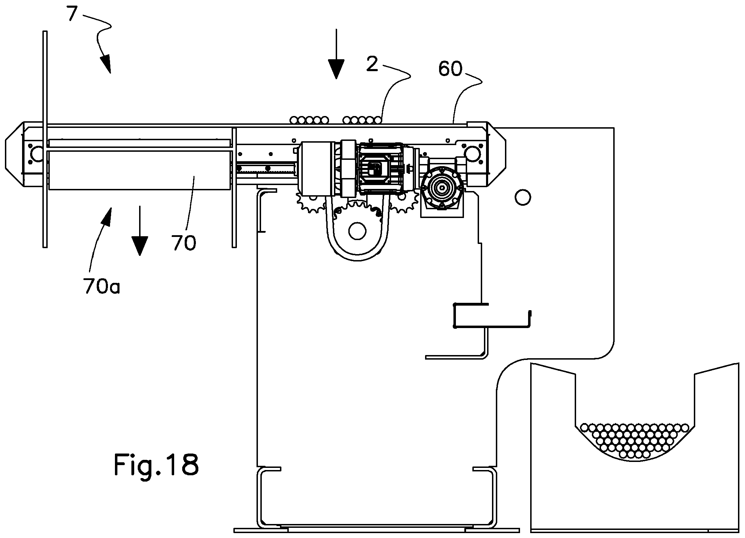

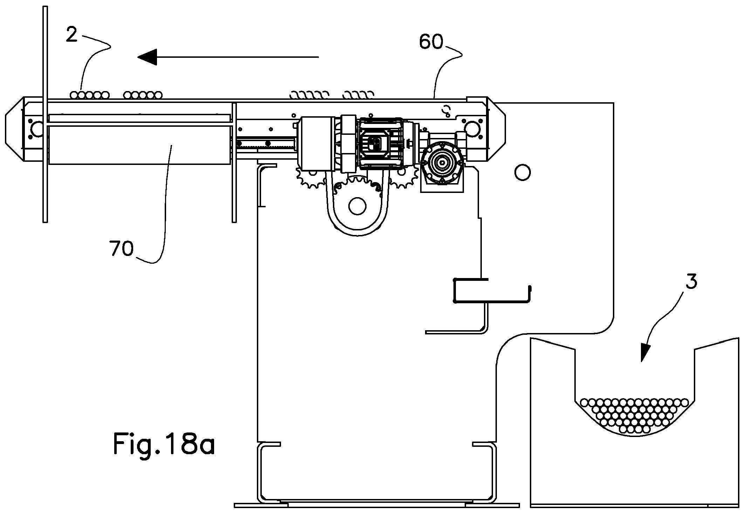

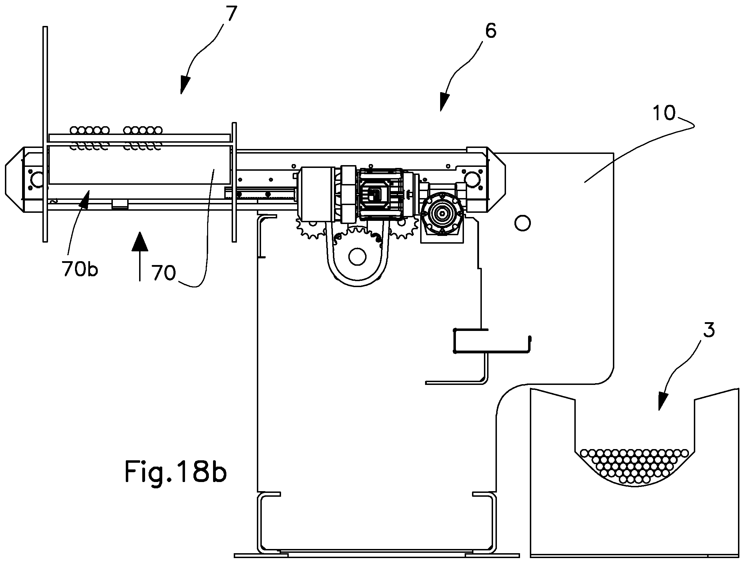

The pre-accumulation assembly 9 can preferably comprise for each transfer member 60 a support element 90 movable alternatively between a submerged position with respect to the transfer member 60, in particular with respect to the transfer portion, and a position emerged therefrom, active for lifting the selected elements 2 from the support on the transfer member 60 (see Figures 17, 17a and 18).

In particular, when the support element 90 is in the emerged position, it does not interfere with the transfer member 60, which can therefore receive further groups of elements 2 selected by the gripping and selection assembly 4.

Finally, the feeding path 7 is preferably made up by means of a roller path 70 (see Figure 16). The transfer members 60 of the transfer assembly 6 may engage, as previously described, between the rollers 70, for releasing the selected elements 2.

The actuation of a relative load motion is provided for between the feeding path 7 and the transfer assembly 6, thanks to which the elements 2 transferred from the transfer assembly 6 are released to the feeding path 7.

Preferably, this relative loading motion comprises a reciprocating motion between a resting configuration 70a, at which the rollers 70 of the feeding way 7 are submerged with respect to said transfer plane and a raised load configuration 70b, at which the rollers 70 are emerged from the same plane, to collect said elements 2 therefrom (see Figs. 18, 18a and 18b).

The method for collecting and feeding elongated elements according to the invention, as well as the operation of the apparatus that implements it, can be easily understood from the above description.

In a first step, a plurality of elements 2 of a certain bundle is released inside the storage compartment 3, positioned in the collecting area P below the operating members of the apparatus 1 (see Figure 1).

The gripping member 40 is then operated in the activation motion from the inactive position inside the structure 10 to the active position extracted externally therefrom, above the storage compartment 3 (see Figure 3). At the same time the selector member 41 is arranged in the inactive configuration, preferably retractable in the structure 10, in order not to interfere with the collecting operations of the gripping member 40.

The gripping member 40 is then operated in the lowering stroke towards the storage compartment 3 (see Figures 1 to 3b).

A more superficial part of the elements 2 present in the storage compartment 3 is therefore attracted by the gripping member 40.

The gripping member 40 may be operated in the regulation motion, in the transverse direction, to evenly collect the elements 2 from the storage compartment 3 (see Figures 3a and 3b).

To complete the collecting step, the gripping member 40 is operated in the lifting stroke to bring the gripping portion 2a of the elements 2 attracted from the collecting height to the intermediate height or, directly, above the transfer height (see Figure 4).

The selection member 41 is then preferably operated in said selection motion.

First, the selector member 41 carries out the first selection step, moving at said controlled distance from the first operating surface 40a along the forward stroke.

This controlled distance is reached, for example, by activating the selector member 41 in the adjustment motion (see Figure 5).

In this way, the first number of elements 2' attracted in excess is intercepted, in particular pushed, by the abutment edge 41b of the same member and removed away from the attraction of the gripping member 40. Said first number of elements 2' in excess therefore falls into the storage compartment 3 (see Figure 6).

The selector member 41 is then operated in the return stroke, in the opposite direction, so as to maintain or hold between the support surface 41a and the first operating surface 40a a desired number, in particular counted, of elements 2 (see Figure 7).

Following the disengagement motion of the gripping member 40, a second number of elements 2" in excess, external to the support surface 41a, falls into the storage compartment 3 (Figure 8).

The gripping member 40 is therefore preferably operated in the disengagement motion in this step (see Figure 9).

The gripping member 40 is then operated in the conversion motion described above, to assume the function of supporting the collected elements 2 and, subsequently, of a lifting member (see Figures 10 - 12).

In practice, the gripping member 40 is operated in the lifting motion to bring the collected and possibly counted elements 2 to a transfer area wherein operates the transfer assembly 6 (see Figure 12).

At this point, or already at said intermediate height if the separation assembly 5 is vertically movable, it is possible to operate the separation assembly 5, moving the separator members 51 along the longitudinal direction A. The counted number of selected elements 2 is therefore separated from the bundle of origin in the storage compartment 3 and spread out in a substantially rectilinear configuration.

Advantageously, in this separation step the locking member 54 cooperates with the gripping member 40 to lock, in particular tighten, the elements 2 at the gripping portion 2a.

Said separated elements 2 therefore rest, preferably centrally, on the gripping member 40 and at the ends on the opposing separator members 51 (see Figure 13a).

In an appropriate relationship with respect to said separation step, the transfer members 60 of the transfer assembly 6 may intervene at the transfer height (see Figure 13a).

More precisely, the transfer members 60 are first operated, by means of the actuation members 61, in the insertion motion, below the selected elements 2, as the respective portions are raised by the separator members 51 substantially, in particular, above the transfer height.

In practice, the transfer members 60 are operated from the feeding configuration 60a to the receiving configuration 60b.

Once the elements 2 are extended longitudinally and the transfer members 60 are inserted below their respective spaced portions, the gripping member 40 is activated in the release motion, thus releasing the selected elements 2 completely resting on the transfer members 60.

The transfer assembly 6 is then actuated in the return stroke of the insertion motion to interact, in a suitable phase relationship, with the feeding path 7, returning the transfer members 60 to the feeding configuration 60a for feeding the feeding path 7 and at the same time freeing up the operating space for the gripping assembly 4.

Following the return stroke of the insertion motion, the elements 2 are advantageously transported in a motion integral with the transfer members 60 (see Figure 16).

Advantageously, this circumstance allows the same elements 2 to maintain the same ordered configuration in which they were released by the selector member 41.

Finally, the transfer assembly 6 is operated in the transfer motion, to transfer the selected elements 2 to the feeding path 7. In particular, the flexible transmission means 62 are moved, to translate the elements 2 in the transverse direction B, always maintaining their ordered configuration. Also in this case, the elements 2 are advantageously transported with an integral motion, therefore without any relative motion, with respect to said transmission means. Therefore, the transfer motion maintains as well the orderly arrangement of the elements 2.

In addition or alternatively, it is possible to keep the elements 2 waiting, before the ordered transfer, thanks to the intervention of the pre-accumulation assembly 9.

In fact, the pre-accumulation assembly 9 can be operated in the emerged position, to support the same elements 2 waiting, and allow the accumulation of further groups of elements 2 collected in one or more subsequent cycles by the gripping assembly 4 (see Figures 17, 17a and 18).

When the desired total number of elements 2 has been accumulated on the pre-accumulation assembly 9, it is then possible to carry out said transfer motion by the transfer assembly 6 (see Figures 18 and 18a). Finally, thanks to the relative loading motion between the feeding path 7 and the transfer assembly 6, the desired number or the desired total number of elements 2 may be released to rest on the feeding path 7 to be fed to the further processing stations (see Figures 18, 18a and 18b).

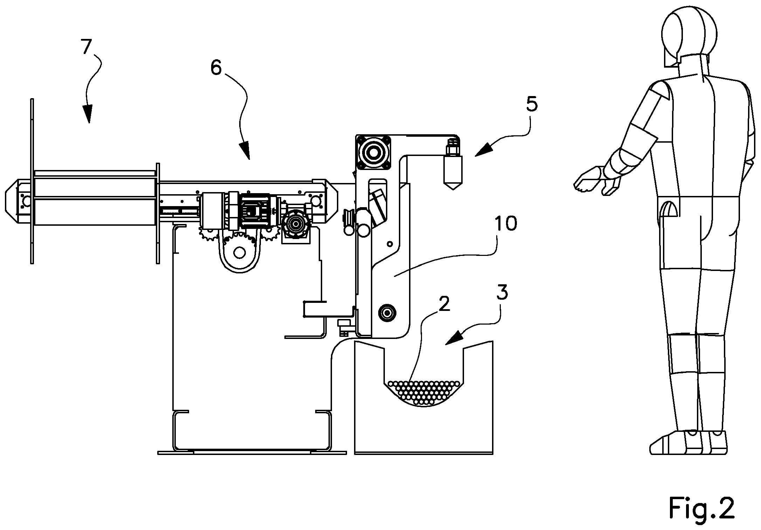

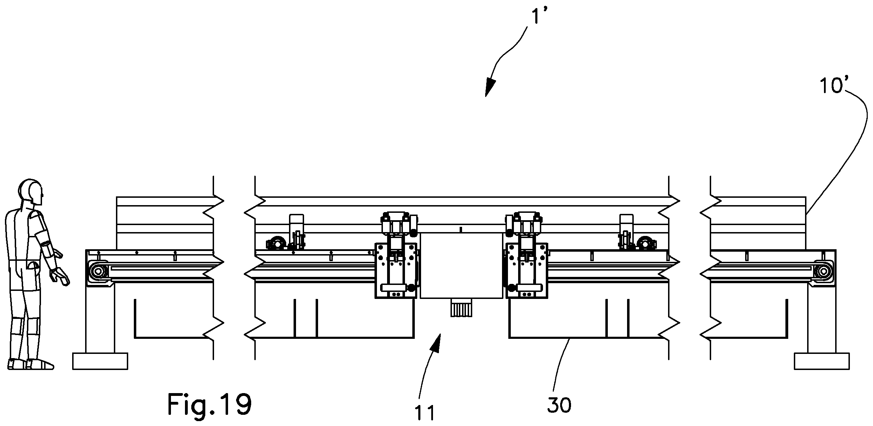

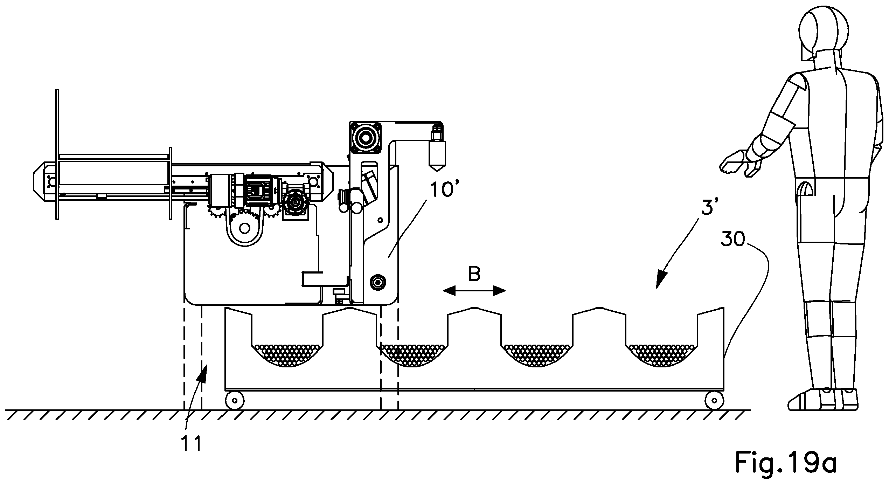

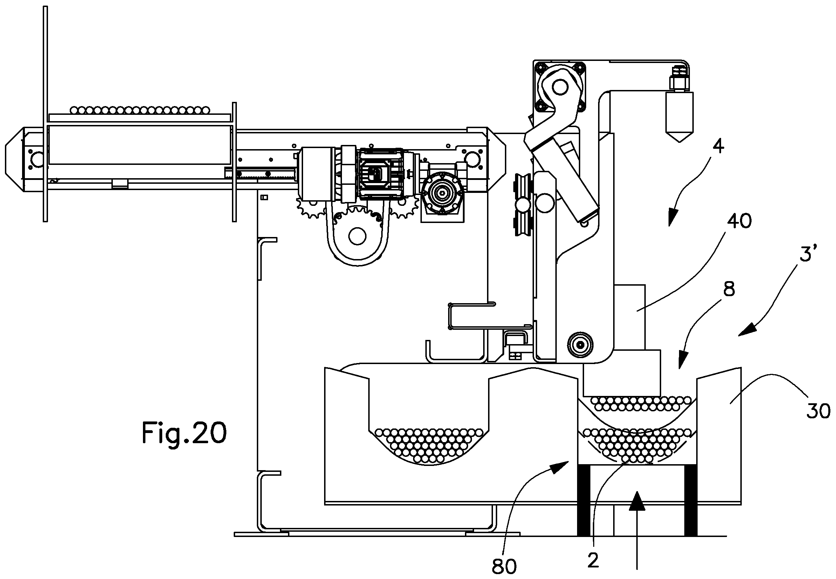

According to a further embodiment shown in Figures 19 and 20, otherwise similar to the first embodiment described, the apparatus 1' has at least one, preferably a plurality of, movable storage compartment 3'. For example, as in the shown case, each storage compartment 3' is carried by a carriage or a slide 30 movable transversely to the apparatus 1, according to the transverse direction B. In this way, it is easy to move the storage compartment 3' and position the elements 2 contained therein at the operating members of the apparatus 1, simply by moving the carriage or the slide 30, for example from a position spaced from the collecting area P, to an operating, collecting position, in which at least one storage compartment 3' is arranged at said collecting area P (see for example Figures 2 and 2a). In particular, said spaced position of the storage compartment 3 can be internal or external to the apparatus 1.

Thanks to the mobility of the carriage or slide 30, each provided storage compartment 3 can therefore be easily positioned at said operating collecting position to be freely usable.

Advantageously, it is possible to adjust the positioning of the carriage or slide 30 in said transverse direction B, even during the same operating cycle of loading, so as to allow uniform collection of the elements 2 from the respective bundle of origin in the storage compartment 3'. In practice, said adjustment, like the adjustment made in the same direction by the gripping member 40 and described above, serves to prevent shrink marks or "holes" from being created in the storage compartment 3', so as to ensure optimal effectiveness of the subsequent collections or "catches" made by the operating members, as described below.

As told before, the carriage 30 may usefully hold a plurality of storage compartments 3, for example at least one pair, so as to arrange elements 2 of different types in as many storage compartments 3', as can be collected from the apparatus 1', as described above.

For this purpose, the structure 10' may advantageously form a suitable recess extending longitudinally to the base of the structure 10' or it may be made in the form of a bridge structure 10' (see Figures 19 and 19a), to allow the passage or in any case the handling of the carriage 30.

In any case, the structure 10' can define a longitudinal opening 11 suitable to allow the housing of at least one further storage compartment 3 in an advanced position, in said transverse direction B, beyond the collecting area P, in a resting or waiting configuration, so as to place an adjacent storage compartment 3' instead, below the operating members of the apparatus 1 (see Figures 19 and 19a).

The opening 11, in particular, extends longitudinally below the structure 10', for the entire length of the elements 2 to be housed at least temporarily beyond said collecting area P.

In the case of the bridge structure 10', said opening 11 can be a through opening.

In any case, the opening 11 allows further storage compartments 3' of the carriage or slide 30, not used, to be housed at rest or standby beyond the structure 10', according to said transverse direction B, so as to place, instead, the storage compartment 3' required for a given collecting cycle in the operating collecting position.

The operation of the apparatus 1' is entirely similar to that described above, for the first embodiment.

It is only observed that in an initial step the storage compartment 3' is moved in the transverse direction B up to the collecting position next to the apparatus 1', in which the elements 2 to be collected are arranged below the operating members of the apparatus 1'.

According to a third embodiment shown in Figure 20, which may be combined with both the first and the second embodiment described above, it is possible to provide that the gripping assembly 4 is associated with an auxiliary lifting assembly 8, opposite to the gripping member 40 in the active position, on the opposite side with respect to the storage compartment 3 in the adjacent position. More precisely, the auxiliary lifting assembly 8 is thus arranged below the elements 2 which rest inside the storage compartment 3'.

The auxiliary lifting assembly 8 preferably comprises a pusher member 80 configured to push, from below, the elements 2 at a respective portion. Preferably the pusher member 80 acts at said gripping portion 2a, so as to lift the elements 2 precisely where works the gripping assembly 4.

The lifting action exerted by the auxiliary lifting assembly 8 also has the function of bringing the gripping portion 2a closer to the gripping member 40 thus shortening the lowering and lifting stroke of the collecting motion (see Figure 20). This action also has the advantage of facilitating the homogeneous consumption of the elements 2 present in the storage compartment 3'.

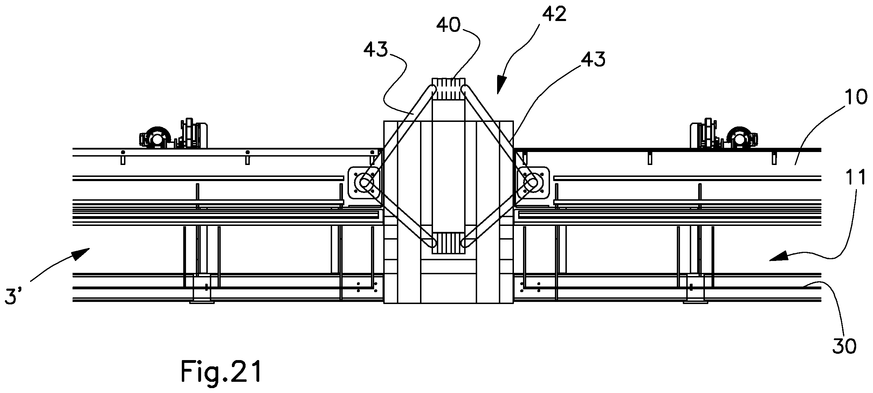

According to a fourth embodiment shown in Figure 21, otherwise similar and combinable to the described embodiments, it is possible to provide that the gripping assembly 40 is operated in the collecting motion and possibly in the lifting motion by means of an articulated drive assembly 42 made, for example, by means of a pair of oscillating arms 43, acting on opposite sides with respect to the gripping member 40. Alternatively, the articulated actuation assembly 42 can comprise a single oscillating arm 43.

The articulated drive assembly 42 has a small dimension. In fact, it enables the gripping assembly 4 to carry out a wide lifting stroke, while still maintaining a free space at the opening 11 below the structure 10', if provided, such as to make it possible the passage of the carriage 30, to position in the collecting operating position any storage compartment 3' freely chosen from the available storage compartments 3'.

In this case it is also possible to provide, alternatively, that the gripping member 40 is actuated in the lifting motion above the transfer height and that, in particular, the selector member 41 carries out said selection motion.

Alternatively, it is also possible to provide that the drive assembly 42 is made by means of telescopic guides or equivalent means.

The operation of the third embodiment described is entirely similar to the operation of the embodiments described above.

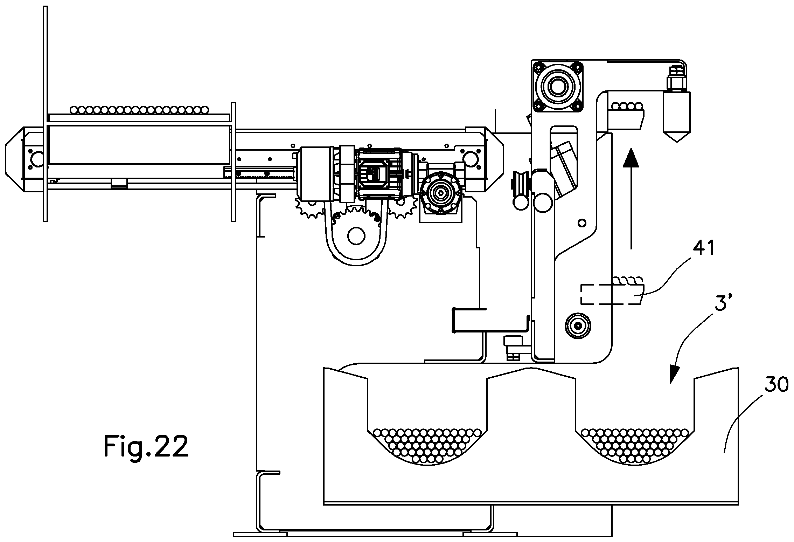

According to a fifth embodiment shown in Figure 22, which can be combined with the embodiments described above, since it is compatible, it is possible to provide, if the gripping member 40 is not operated in said conversion motion, the selection member 41 or equivalent support means, perform said lifting motion, thus bringing the collected and possibly selected elements 2 from the upper height to the transfer height or, in any case, to a height in the transfer area so that they can be released to the transfer assembly 6.

The operation of the apparatus is similar for the rest to that described for the previous embodiments.

The method according to the invention and the apparatus that implements it therefore enable the collection and feeding of the elongated elements in effective and easy way.

In the practical embodiment of the invention, the used materials, as well as the shape and the dimensions, may be modified depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. Method for collecting and feeding elongated metal elements, in particular metal profiles, for example intended for a welding, cutting and/or bending cycle, comprising the steps of:
a. arranging along a longitudinal direction (A) a plurality of elongated metal elements (2), resting on a storage compartment (3, 3') placed in a collecting area (P);
b. arranging an apparatus (1, 1') for collecting and feeding said elements (2), comprising a fixed structure (10, 10'), developing along said longitudinal direction (A) and having a gripping assembly (4) comprising a gripping member (40) arranged in an active position for collecting said elements (2) at said collecting area (P);
c. operating said gripping member (40) relative to said storage compartment (3, 3') according to a collecting motion, in a lowering stroke to bring said gripping member (40) towards a gripping portion (2a) of said elements (2) placed at a collecting height, and in a lifting stroke to lift at least a part of said elements (2) at said respective gripping portion (2a), from said collecting height to a higher height, acting on said elements (2) with a respective first operating surface (40a) via magnetic attraction;
d. removing by pushing away from the attractive grip of said gripping member (40) a first number of elements (2') in excess, by operating a selector member (41) in a selection motion from an inactive configuration to an active configuration along a direction parallel to said first operating surface (40a), by means of a reference edge (41b) of said selector member (41), and retaining by a support surface (41a) of said selector member (41) elements (2) remained in attracted grip of said gripping member (40), thus selected, interposed between said first operating surface (41a) of said gripping member (40) and said support surface (41a) of said selector member (41) at said active configuration;
e. operating said gripping assembly (4) to release said selected elements (2) to a transfer assembly (6) at a transfer height, to transfer said selected elements (2) to a feeding path (7) arranged downstream.

2. Method according to claim 1, **characterized in that** at said active configuration said selector member (41) is suitable for supporting said selected elements (2) by means of said support surface (41a) and said support surface (41a) results facing underneath said first operating surface (40a) and spaced from it by a controlled distance, in which said selected elements (2) are retained.

3. Method according to claim 1 or 2, **characterized in that** said selector member (41) is in a retreated position at said inactive configuration and in an advanced position at said active configuration along said direction of said selection motion with respect to the fixed structure (10, 10'), advanced at least by said gripping member (40).

4. Method according to any one of the preceding claims, **characterized in that** said step d. of operating said selection member (41) is followed by a second step of selection, through a controlled return stroke of said selection motion, following which a second number of elements (2") in excess is excluded from the interaction with said selector member (41).

5. Method according to any of claims 2 to 4, **characterized in that** in said selection motion said controlled distance is substantially equal to a distance between once and twice a transverse height of said elements (2), so as to select a corresponding number of rows of said elements (2).

6. Method according to any one of the preceding claims, **characterized in that** said step e. of operating said gripping assembly (4) to release said elements (2) is preceded by the step of separating by means of a separation assembly (5, 5') operated in a separating motion along said longitudinal direction (A) said selected elements (2) from a remaining part of said elements (2), intended to remain at least temporarily in said storage compartment (3).

7. Method according to any one of the preceding claims, **characterized in that** said separation motion occurs at an intermediate height between said collecting height and said transfer height or substantially at said transfer height.

8. Method according to any one of the preceding claims, **characterized in that** before said step c. of operating said gripping member (40) it provides for moving said storage compartment (3') in a transverse direction (B) up to said collecting area (P) underlying said gripping member (40) in said active position.

9. Method according to claim 8, **characterized in that** it provides for arranging at least one further said storage compartment (3'), in a waiting or resting position, inside an opening (11) extending longitudinally below said structure (10, 10').

10. Method according to any one of the preceding claims, **characterized in that** in said transfer motion said released elements (2) are moved in a motion integral with said transfer assembly (6), so as to maintain a respective ordered position unchanged.

11. Method according to any one of the preceding claims, **characterized in that** it comprises the further step of moving said storage compartment (3, 3') and said gripping member (40) according to a regulation motion in said transverse direction (B) within said collecting area (P), if necessary or in a programmed way, to evenly distribute the collection of said elements (2) from said storage compartment (3, 3').

12. Method according to any one of the preceding claims, **characterized in that** it includes the further step of operating said gripping member (40) in a disengagement motion, from said active position to an inactive position, retractable in said structure (10, 10').

13. Method according to claim 12, **characterized in that** said disengagement motion and/or a corresponding activation motion, returning from said inactive position to said active position, is a substantially horizontal translation motion.

14. Method according to claim 12 or 13, **characterized in that** after the operation of said disengagement motion, it provides for operating said gripping member (40) in a conversion motion, to change its function, transforming itself into a support member of the selected elements (2), said conversion motion comprising a first stroke, in which said gripping member (40) is moved from said inactive position, retractable in said structure (10, 10'), at a height lower than the aforementioned upper collection height, and a second support stroke, in which said gripping member (40) is extracted externally from said structure (10, 10'), so as to intercept said selected elements (2) from below.

15. Method according to claim 14, **characterized in that** after said step in which said gripping member (40) is operated in said conversion motion, it comprises the step of operating said gripping member (40) in a lifting motion, to bring said intercepted elements (2) from said higher height to said transfer height.

16. Method according to any one of the preceding claims, **characterized in that** it comprises the further step of operating said transfer assembly (6) in an insertion motion at said transfer height from a feeding configuration (60a), interacting with said feeding path (7) to a receiving configuration (60b), in interaction with said gripping member (40) and/or equivalent support means of said elements (2) collected from said gripping member (40).

17. Method according to claim 16, **characterized in that** following said insertion motion, said elements (2) are released to said transfer assembly (6) and subsequently moved integrally to it in said feeding configuration (60a) by means of a motion integral with said transfer assembly (6), keeping thus unchanged an ordered arrangement of said elements (2).

18. Method according to any one of the preceding claims, **characterized in that** it provides the further step of operating a counting assembly comprising detection means configured to detect the weight of said elements (2) inside said storage compartment (3, 3'), said detection means supplying at least a datum relating to the weight of said elements (2) before and after the transfer of said elements (2) to processing means, to count said elements (2) selected and transferred at each operating cycle made by said gripping member (40).

19. Method according to any one of the preceding claims, **characterized in that** it comprises the further step of pre-accumulating said released elements (2), by means of a pre-accumulating assembly (9) comprising at least one support member (90) movable alternately between a submerged position with respect to said transfer height, and a position emerged from it, active for lifting said elements (2) released from the support on said transfer assembly (6).

20. Method according to any one of the preceding claims, **characterized in that** said gripping assembly (4) is positioned in a substantially central position with respect to said longitudinal development of said fixed structure (10, 10').

21. Apparatus for collecting and feeding elongated metal elements, comprising a fixed structure (10, 10') developing along a longitudinal direction (A), a gripping assembly (4) carried by said fixed structure (10, 10') and comprising a gripping member (40) configured to operate in an active position to collect a number of said elements (2) from a storage compartment (3, 3'), configured to receive in support along said longitudinal direction (A) a plurality of said elements (2) at a collecting area (P) underlying said gripping member (40) in said active position, said gripping member (40) comprising a first operative surface (40a) configured to act on said elements (2) by means of magnetic attraction, and being operable in a collection motion in a lowering stroke at a collecting height and in a lifting stroke from said collecting height at an upper height, **characterized in that** it comprises a selector member (41) comprising a support surface (41a) for retaining elements (2) selected from said number of said elements (2) and a reference edge (41b), said selector member (41) being operable in a selection motion in a direction parallel to said first operative surface (40a) from an inactive configuration to an active configuration to push away and remove away a first number of elements (2') in excess from the attractive grip of said gripping member (40) and to retain interposed between said support surface (41a) and said first operative surface (40a) at said active configuration said selected elements (2), and a transfer assembly (6) movable in a transfer motion at a transfer height, to transfer said selected elements (2) to a feeding path (7) arranged downstream, said gripping assembly (4) being configured to release said selected elements (2) to said transfer assembly (6).

22. Apparatus according to claim 21, **characterized in that** said support surface (41a) at said active configuration is facing underneath said operative surface (40a) and spaced from it by a controlled distance, to retain interposed said selected elements (2).

23. Apparatus according to claim 21 or 22, **characterized in that** said selector member (41) is in a retreated position at said inactive configuration and is in an advanced position at said active configuration along said direction of said selection motion with respect to said fixed structure (10, 10'), advanced at least by said gripping member (40).

24. Apparatus according to one of claims 21 to 23, **characterized in that** said selector member (41) is further movable in said selection motion in a second selection step, carried out by means of a controlled return stroke, following which a second number of elements (2") in excess is excluded from interaction with said selector member (41).

25. Apparatus according to claim 22, **characterized in that** said controlled distance is substantially equal to a multiple of a transverse dimension of said elements (2), preferably equal to a distance between one and two times a transverse dimension of said elements (2).

26. Apparatus according to any one of claims 21 to 25, **characterized in that** it comprises a separation assembly (5, 5') operable in a separation motion along said longitudinal direction (A) to separate said selected elements (2) from a remaining part of said elements (2) intended to remain at least temporarily in said storage compartment (3).

27. Apparatus according to any one of claims 21 to 26, **characterized in that** it is in combination with a said storage compartment (3') movable, at least in a transverse direction (B), up to said collecting area (P) underlying said gripping member (40) in said active position.

28. Apparatus according to claim 27, **characterized in that** it comprises a further said movable storage compartment (3'), said structure (10') comprising an opening (11) extending longitudinally below said structure (10, 10'), for arranging inside said further storage compartment (3') in a waiting or resting position.

29. Apparatus according to claim 27 or 28, **characterized in that** said fixed structure (10') is bridge-shaped, said opening (11) thus passing through the passage and/or housing of said storage compartment (3') and or of an additional storage compartment (3').

30. Apparatus according to any one of claims 21 to 29, **characterized in that** said transfer motion is a translation motion to maintain an unchanged ordered arrangement of said released elements (2).

31. Apparatus according to any one of claims 21 to 30, **characterized in that** it comprises operation means for operating in a relative adjustment motion in a transverse direction (B) said storage compartment (3, 3') and said gripping member (40) within said collecting area (P), if necessary or in a programmed way, to evenly distribute the collection of said elements (2).

32. Apparatus according to any one of claims 21 to 31, **characterized in that** said transfer assembly (6) is movable according to an insertion motion at said transfer height in a transverse direction (B) from a feeding configuration (60a), in interaction with said feeding path (7) to a receiving configuration (60b), in interaction with said gripping member (40) and/or supporting means of said elements (2) collected from said gripping member (40).

33. Apparatus according to claim 32, **characterized in that** said insertion motion is a translation motion between said feeding configuration (60a) and said receiving configuration (60b), to transport said elements (2) collected in an integral motion, so as to maintain a respective ordered arrangement.

34. Apparatus according to any one of claims 21 to 33, **characterized in that** it comprises a counting assembly comprising detection means configured to detect the weight of said elements (2) when arranged inside said storage compartment (3, 3'), and to provide at least one datum relating to the weight of said elements (2) before and after the transfer of said selected elements (2) to processing means, to count at each operating cycle carried out by said gripping assembly (40) said selected elements (2).

35. Apparatus according to any one of claims 21 to 34, **characterized in that** it comprises a pre-accumulation assembly (9) configured to cooperate with said transfer assembly (6) and comprising at least one support member (90) movable alternately between a submerged position with respect to said transfer height, in which said pre-accumulation assembly (9) does not interfere with said transfer assembly (6), and an active position emerged from said transfer height, to lift said elements (2) from the support on said transfer assembly (6).

36. Apparatus according to any one of claims 21 to 35, **characterized in that** said gripping member (40) is movable in a disengagement motion, from said active position to an inactive position, retractable in said structure (10, 10').

37. Apparatus according to claim 36, **characterized in that** said gripping member (40) is movable in a conversion motion, to change its function, transforming itself into a support member of said selected elements (2), said conversion motion comprising a first stroke, wherein said gripping member (40) is moved from said inactive position, retractable in said structure (10, 10'), at a lower height than the aforementioned upper collecting height, and a second supporting stroke, wherein said gripping member (40) is extracted externally to said structure (10, 10'), to intercept said collected elements (2) by means of a respective second upper operative surface (40b).

38. Apparatus according to claim 37, **characterized in that** said gripping member (40) is movable in a lifting motion, to bring said intercepted elements (2) from said upper height to said transfer height.

39. Apparatus according to any one of claims from 21 to 38, **characterized in that** said gripping assembly (4) is positioned in a substantially central position of said longitudinal development of said fixed structure (10, 10').

## Patentansprüche

1. Verfahren zum Sammeln und Zuführen von länglichen Metallelementen, insbesondere Metallprofilen, beispielsweise für einen Schweiß-, Schneid- und/oder Biegezyklus, umfassend die folgenden Schritte:
a. Anordnen mehrerer länglichen Metallelementen (2) entlang einer Längsrichtung (A), die auf einem Lagerfach (3, 3') ruhen, das in einem Sammelbereich (P) platziert ist;
b. Anordnen einer Vorrichtung (1, 1') zum Sammeln und Zuführen der Elemente (2), die eine feste Struktur (10, 10') umfasst, die sich entlang der Längsrichtung (A) entwickelt und eine Greifanordnung (4) aufweist, die ein Greifelement (40) umfasst, das in einer aktiven Position zum Sammeln der Elemente (2) an dem Sammelbereich (P) angeordnet ist;
c. Betätigen des Greifelements (40) relativ zum Lagerfach (3, 3') gemäß einer Sammelbewegung, in einem Absenkungshub, um das Greifelement (40) zu einem Greifabschnitt (2a) der Elemente (2) zu bringen, die in einer Sammelhöhe angeordnet sind, und in einem Anhebungshub, um mindestens einen Teil der Elemente (2) an dem jeweiligen Greifabschnitt (2a) von der Sammelhöhe auf eine größere Höhe anzuheben, wobei auf die Elemente (2) mit einer jeweiligen ersten Betätigungsfläche (40a) mittels magnetische Anziehung eingewirkt wird;
d. Entfernen einer ersten Anzahl von überschüssigen Elementen (2') durch Wegschieben aus dem Anziehungsgriff des Greifelements (40) durch Betätigen eines Auswahlelements (41) in einer Auswahlbewegung von einer inaktiven Konfiguration zu einer aktiven Konfiguration entlang einer Richtung parallel zu der ersten Betätigungsfläche (40a) mittels einer Referenzkante (41b) des Auswahlelements (41), und durch eine Stützfläche (41a) des Auswahlelements (41) Elemente (2), die im Anziehungsgriff des Greifelements (40) verbleiben und so ausgewählt werden, zwischen der ersten Betätigungsfläche (41a) des Greifelements (40) und der Stützfläche (41a) des Auswahlelements (41) in der aktiven Konfiguration eingefügt werden;
e. Betätigen der Greifanordnung (4), um die ausgewählten Elemente (2) an eine Übergabeanordnung (6) in einer Übergabehöhe freizugeben, um die ausgewählten Elemente (2) an einen stromabwärts angeordneten Zuführweg (7) zu übergeben.

2. Verfahren nach Anspruch 1, **dadurch gekennzeichnet, dass** in der aktiven Konfiguration das Auswahlelement (41) geeignet ist, die ausgewählten Elemente (2) mittels der Stützfläche (41a) auszuwählen, und dass die Stützfläche (41a) unterhalb der ersten Betätigungsfläche (40a) liegt und von dieser um einen kontrollierten Abstand beabstandet ist, in dem die ausgewählten Elemente (2) gehalten werden.

3. Verfahren nach Anspruch 1 oder 2, **dadurch gekennzeichnet, dass** sich das Auswahlelement (41) in einer zurückgezogenen Position in der inaktiven Konfiguration und in einer vorgeschobenen Position in der aktiven Konfiguration längs der Richtung der Auswahlbewegung hinsichtlich der fest angebrachten Struktur (10, 10') befindet, die zumindest durch das Greifelement (40) vorgeschoben wird.

4. Verfahren nach einem der vorhergehenden Ansprüche, **dadurch gekennzeichnet, dass** auf den Schritt d. des Betätigens des Auswahlelements (41) ein zweiter Schritt des Auswählens durch einen gesteuerten Rückhub der Auswahlbewegung folgt, nach der eine zweite Anzahl von überschüssigen Elementen (2") von der Wechselwirkung mit dem Auswahlelement (41) ausgeschlossen wird.

5. Verfahren nach einem der Ansprüche 2 bis 4, **dadurch gekennzeichnet, dass** bei der Auswahlbewegung der gesteuerte Abstand im Wesentlichen gleich einem Abstand zwischen dem Ein-und Zweifachen einer Querhöhe der Elemente (2) ist, um eine entsprechende Anzahl von Reihen der Elemente (2) auszuwählen.

6. Verfahren nach einem der vorangehenden Ansprüche, **dadurch gekennzeichnet, dass** dem Schritt e. des Betätigens der Greifanordnung (4) zum Freigeben der Elemente (2) der Schritt des Trennens der ausgewählten Elemente (2) von einem verbleibenden Teil der Elemente (2), der dazu bestimmt ist, mindestens vorübergehend im Lagerfach (3) zu verbleiben, durch eine Trennanordnung (5, 5') vorausgeht, die in einer Trennbewegung entlang der Längsrichtung (A) betrieben wird.

7. Verfahren nach einem der vorhergehenden Ansprüche, **dadurch gekennzeichnet, dass** die Trennungsbewegung auf einer Zwischenhöhe zwischen der Sammelhöhe und der Übergabehöhe oder im Wesentlichen auf der Übergabehöhe erfolgt.

8. Verfahren nach einem der vorhergehenden Ansprüche, **dadurch gekennzeichnet, dass** es vor dem Schritt c. des Betreibens des Greifelements (40) das Bewegen des Lagerfachs (3') in einer Querrichtung (B) bis zu dem Sammelbereich (P), der unter dem Greifelement (40) in der aktiven Position liegt, vorsieht.

9. Verfahren nach Anspruch 8, **dadurch gekennzeichnet, dass** es vorsieht, mindestens ein weiteres Lagerfach (3') in einer Warte- oder Ruheposition innerhalb einer Öffnung (11) anzuordnen, die sich in Längsrichtung unter der Struktur (10, 10') erstreckt.

10. Verfahren nach einem der vorhergehenden Ansprüche, **dadurch gekennzeichnet, dass** bei der Transferbewegung die freigegebenen Elemente (2) in einer Bewegung bewegt werden, die integral mit der Transferanordnung (6) ist, um eine jeweilige geordnete Position unverändert beizubehalten.

11. Verfahren nach einem der vorhergehenden Ansprüche, **dadurch gekennzeichnet, dass** es den weiteren Schritt des Bewegens des Lagerfachs (3, 3') und des Greifelements (40) gemäß einer Regelungsbewegung in Querrichtung (B) innerhalb des Sammelbereichs (P) umfasst, falls erforderlich oder programmiert, um die Sammlung der Elemente (2) aus dem Lagerfach (3, 3') gleichmäßig zu verteilen.

12. Verfahren nach einem der vorhergehenden Ansprüche, **dadurch gekennzeichnet, dass** es den weiteren Schritt der Betätigung des Greifelements (40) in einer Ausrückbewegung von der aktiven Position in eine inaktive Position beinhaltet, die in die Struktur (10, 10') zurückziehbar ist.

13. Verfahren nach Anspruch 12, **dadurch gekennzeichnet, dass** die Ausrückbewegung und/oder eine entsprechende Aktivierungsbewegung, die von der inaktiven Position in die aktive Position zurückkehrt, eine im Wesentlichen horizontale Translationsbewegung ist.

14. Verfahren nach Anspruch 12 oder 13, **dadurch gekennzeichnet, dass** es nach dem Betrieb der Ausrückbewegung vorsieht, das Greifelement (40) in eine Umwandlungsbewegung zu betreiben, um seine Funktion zu ändern und sich in ein Stützelement der ausgewählten Elemente (2) umzuwandeln, wobei die Umwandlungsbewegung einen ersten Hub, bei dem das Greifelement (40) aus der inaktiven Position, die in der Struktur (10, 10') zurückziehbar ist, in einer Höhe, die niedriger als die oben genannte obere Sammelhöhe ist, bewegt wird, und einen zweiten Stützhub, bei dem das Greifelement (40) von außen aus der Struktur (10, 10') herausgezogen wird, um die ausgewählten Elemente (2) von unten abzufangen, umfasst.

15. Verfahren nach Anspruch 14, **dadurch gekennzeichnet, dass** es nach dem Schritt, in dem das Greifelement (40) in der Umwandlungsbewegung betrieben wird, den Schritt des Betreibens des Greifelements (40) in einer Hubbewegung umfasst, um die abgefangenen Elemente (2) von der höheren Höhe auf die Übergabehöhe zu bringen.

16. Verfahren nach einem der vorhergehenden Ansprüche, **dadurch gekennzeichnet, dass** es den weiteren Schritt des Betreibens der Transferanordnung (6) in einer Einführbewegung auf der Transferhöhe von einer Zuführkonfiguration (60a), die mit dem Zuführweg (7) zusammenwirkt, zu einer Aufnahmekonfiguration (60b) in Wechselwirkung mit dem Greifelement (40) und/oder äquivalenten Stützmitteln der Elemente (2), die von dem Greifelement (40) gesammelt werden, umfasst.

17. Verfahren nach Anspruch 16, **dadurch gekennzeichnet, dass** nach der Einführbewegung die Elemente (2) an die Transferanordnung (6) freigegeben werden und anschließend integral an diese in der Zuführkonfiguration (60a) mittels einer Bewegung, die integral mit der Transferanordnung (6) ist, bewegt werden, wodurch eine geordnete Verteilung der Elemente (2) unverändert bleibt.

18. Verfahren nach einem der vorhergehenden Ansprüche, **dadurch gekennzeichnet, dass** es ferner den Schritt des Betreibens einer Zähleinheit vorsieht, die Erfassungsmittel umfasst, die so konfiguriert sind, dass sie das Gewicht der Elemente (2) im Inneren des Lagerfachs (3, 3') erfassen, wobei die Erfassungsmittel mindestens ein Bezugswert liefern, das sich auf das Gewicht der Elemente (2) vor und nach der Übergabe der Elemente (2) an Verarbeitungsmittel bezieht, um die ausgewählten und übergebenen Elemente (2) bei jedem durch das Greifelement (40) ausgeführten Betriebszyklus zu zählen.

19. Verfahren nach einem der vorhergehenden Ansprüche, **dadurch gekennzeichnet, dass** es den weiteren Schritt des Vorakkumulierens der freigegebenen Elemente (2) mittels einer Vorakkumulationsanordnung (9) umfasst, die mindestens ein Stützelement (90) umfasst, das abwechselnd zwischen einer untergetauchten Position in Bezug auf die Transferhöhe und einer daraus hervorgegangenen Position beweglich ist und zum Anheben der von der Stütze auf der Transferanordnung (6) freigegebenen Elemente (2) aktiv ist.

20. Verfahren nach einem der vorhergehenden Ansprüche, **dadurch gekennzeichnet, dass** die Greifanordnung (4) in einer im Wesentlichen zentralen Position in Bezug auf die Längsentwicklung der festen Struktur (10, 10') positioniert ist.

21. Vorrichtung zum Sammeln und Zuführen von länglichen Metallelementen, umfassend eine feste Struktur (10, 10'), die sich entlang einer Längsrichtung (A) entwickelt, eine Greifanordnung (4), die von der festen Struktur (10, 10') getragen wird und ein Greifelement (40) umfasst, das so konfiguriert ist, dass es in einer aktiven Position arbeitet, um eine Anzahl der Elemente (2) aus einem Lagerfach (3, 3') zu sammeln, das so konfiguriert ist, dass es mehrere der Elemente (2) in einem Sammelbereich (P), der unter dem Greifelement (40) in der aktiven Position liegt, in einer Stütze entlang der Längsrichtung (A) aufnimmt, wobei das Greifelement (40) eine erste Betriebsfläche (40a) umfasst, die so konfiguriert ist, dass sie durch magnetische Anziehung auf die Elemente (2) einwirkt, und in einer Sammelbewegung in einem Absenkungshub in einer Sammelhöhe und in einem Anhebungshub von der Sammelhöhe in einer oberen Höhe betreibbar ist, **dadurch gekennzeichnet, dass** es ein Auswahlelement (41) umfasst, das eine Stützfläche (41a) zum Halten von Elementen (2), die aus der Anzahl der Elemente (2) ausgewählt sind, und eine Referenzkante (41b) aufweist, wobei das Auswahlelement (41) in einer Auswahlbewegung in einer Richtung parallel zu der ersten Betriebsfläche (40a) von einer inaktiven Konfiguration zu einer aktiven Konfiguration betätigbar ist, um eine erste Anzahl von Elementen (2'), die über den Anziehungsgriff des Greifelements (40) hinausgehen, wegzuschieben und zu entfernen und um die ausgewählten Elemente (2) zwischen der Stützfläche (41a) und der ersten Betriebsfläche (40a) in der aktiven Konfiguration zu halten, und eine Transferanordnung (6), die in einer Transferbewegung auf einer Transferhöhe beweglich ist, um die ausgewählten Elemente (2) zu einem stromabwärts angeordneten Zuführungsweg (7) zu transferieren, wobei die Greifanordnung (4) so konfiguriert ist, dass sie die ausgewählten Elemente (2) an die Transferanordnung (6) freigibt.

22. Vorrichtung nach Anspruch 21, **dadurch gekennzeichnet, dass** die Stützfläche (41a) an der aktiven Konfiguration unter die Betriebsfläche (40a) zeigt und von dieser um einen gesteuerten Abstand beabstandet ist, um die ausgewählten Elemente (2) dazwischen zu halten.

23. Vorrichtung nach Anspruch 21 oder 22, **dadurch gekennzeichnet, dass** sich das Auswahlelement (41) in der inaktiven Konfiguration in einer zurückgezogenen Position befindet und sich in der aktiven Konfiguration entlang der Richtung der Auswahlbewegung in Bezug auf die feste Struktur (10, 10') in einer vorgeschobenen Position befindet, die zumindest durch das Greifelement (40) vorgeschoben wird.

24. Vorrichtung nach einem der Ansprüche 21 bis 23, **dadurch gekennzeichnet, dass** das Auswahlelement (41) ferner in der Auswahlbewegung in einem zweiten Auswahlschritt bewegbar ist, der mittels eines gesteuerten Rückhubs ausgeführt wird, wonach eine zweite Anzahl von überschüssigen Elementen (2"), von der Interaktion mit dem Auswahlelement (41) ausgeschlossen ist.

25. Vorrichtung nach Anspruch 22, **dadurch gekennzeichnet, dass** der gesteuerte Abstand im Wesentlichen gleich einem Vielfachen einer Querabmessung der Elemente (2) ist, vorzugsweise gleich einem Abstand zwischen dem Ein- und Zweifachen einer Querabmessung der Elemente (2).

26. Vorrichtung nach einem der Ansprüche 21 bis 25, **dadurch gekennzeichnet, dass** sie eine Trennungsanordnung (5, 5') umfasst, die in einer Trennungsbewegung entlang der Längsrichtung (A) betrieben werden kann, um die ausgewählten Elemente (2) von einem verbleibenden Teil der Elemente (2) zu trennen, die zumindest vorübergehend im Lagerfach (3) verbleiben sollen.

27. Vorrichtung nach einem der Ansprüche 21 bis 26, **dadurch gekennzeichnet, dass** sie mit einem Lagerfach (3') kombiniert ist, das zumindest in einer Querrichtung (B) bis zum Sammelbereich (P) bewegbar ist, der unter dem Greifelement (40) in der aktiven Position liegt.

28. Vorrichtung nach Anspruch 27, **dadurch gekennzeichnet, dass** sie ein weiteres bewegliches Lagerfach (3') umfasst, wobei die Struktur (10') eine Öffnung (11) umfasst, die sich in Längsrichtung unter der Struktur (10, 10') erstreckt, um innerhalb des weiteren Lagerfachs (3') in einer Warte- oder Ruheposition angeordnet zu sein.

29. Vorrichtung nach Anspruch 27 oder 28, **dadurch gekennzeichnet, dass** die feste Struktur (10') brückenförmig ist, wobei die Öffnung (11) somit durch den Durchgang und/oder das Gehäuse des Lagerfachs (3') und/oder eines zusätzlichen Lagerfachs (3') verläuft.

30. Vorrichtung nach einem der Ansprüche 21 bis 29, **dadurch gekennzeichnet, dass** die Transferbewegung eine Translationsbewegung ist, um eine unveränderte geordnete Anordnung der freigegebenen Elemente (2) aufrechtzuerhalten.

31. Vorrichtung nach einem der Ansprüche 21 bis 30, **dadurch gekennzeichnet, dass** sie Betriebsmittel zum Betreiben in einer relativen Einstellbewegung in einer Querrichtung (B) des Lagerfachs (3, 3') und des Greifelements (40) innerhalb des Sammelbereichs (P) umfasst, falls erforderlich oder auf programmierte Weise, um die Sammlung der Elemente (2) gleichmäßig zu verteilen.

32. Vorrichtung nach einem der Ansprüche 21 bis 31, **dadurch gekennzeichnet, dass** die Transferanordnung (6) gemäß einer Einführbewegung auf der Transferhöhe in einer Querrichtung (B) von einer Zuführkonfiguration (60a) in Wechselwirkung mit dem Zuführweg (7) zu einer Aufnahmekonfiguration (60b) in Wechselwirkung mit dem Greifelement (40) und/oder Trägermitteln der von dem Greifelement (40) gesammelten Elemente (2) bewegbar ist.

33. Vorrichtung nach Anspruch 32, **dadurch gekennzeichnet, dass** die Einführbewegung eine Translationsbewegung zwischen der Zuführkonfiguration (60a) und der Aufnahmekonfiguration (60b) ist, um die in einer integralen Bewegung gesammelten Elemente (2) zu transportieren, um eine jeweilige geordnete Anordnung aufrechtzuerhalten.

34. Vorrichtung nach einem der Ansprüche 21 bis 33, **dadurch gekennzeichnet, dass** sie eine Zählanordnung umfasst, die Erfassungsmittel umfasst, die konfiguriert sind, um das Gewicht der Elemente (2) zu erfassen, wenn sie innerhalb des Aufbewahrungsfachs (3, 3') angeordnet sind, und um mindestens ein Datum bereitzustellen, das sich auf das Gewicht der Elemente (2) vor und nach der Übertragung der ausgewählten Elemente (2) an Verarbeitungsmittel bezieht, um bei jedem Betriebszyklus, der von der Greifanordnung (40) ausgeführt wird, die ausgewählten Elemente (2) zu zählen.

35. Vorrichtung nach einem der Ansprüche 21 bis 34, **dadurch gekennzeichnet, dass** sie eine Vorakkumulationsanordnung (9) umfasst, die konfiguriert ist, um mit der Transferanordnung (6) zusammenzuwirken, und mindestens ein Stützelement (90) umfasst, das abwechselnd zwischen einer eingetauchten Position in Bezug auf die Transferhöhe, in der die Vorakkumulationsanordnung (9) die Transferanordnung (6) nicht stört, und einer aktiven Position, die aus der Transferhöhe hervorgeht, bewegbar ist, um die Elemente (2) von der Stütze auf der Transferanordnung (6) anzuheben.

36. Vorrichtung nach einem der Ansprüche 21 bis 35, **dadurch gekennzeichnet, dass** das Greifelement (40) in einer Ausrückbewegung von der aktiven Position in eine inaktive Position bewegbar ist, die in die Struktur (10, 10') einziehbar ist.

37. Vorrichtung nach Anspruch 36, **dadurch gekennzeichnet, dass** das Greifelement (40) in einer Umwandlungsbewegung bewegbar ist, um seine Funktion zu ändern und sich in ein Stützelement der ausgewählten Elemente (2) umzuwandeln, wobei die Umwandlungsbewegung einen ersten Hub, wobei das Greifelement (40) aus der inaktiven Position, die in der Struktur (10, 10') zurückziehbar ist, in einer niedrigeren Höhe als der oben genannten oberen Sammelhöhe bewegt wird, und einen zweiten Stützhub umfasst, wobei das Greifelement (40) außerhalb der Struktur (10, 10') herausgezogen wird, um die gesammelten Elemente (2) mittels einer jeweiligen zweiten oberen Betriebsläche (40b) abzufangen.

38. Vorrichtung nach Anspruch 37, **dadurch gekennzeichnet, dass** das Greifelement (40) in einer Hubbewegung bewegbar ist, um die abgefangenen Elemente (2) von der oberen Höhe auf die Übergabehöhe zu bringen.

39. Vorrichtung nach einem der Ansprüche 21 bis 38, **dadurch gekennzeichnet, dass** die Greifanordnung (4) in einer im Wesentlichen zentralen Position der Längsentwicklung der festen Struktur (10, 10') positioniert ist.

## Revendications

1. Procédé de collecte et d'alimentation d'éléments métalliques allongés, en particulier de profilés métalliques, par exemple destinés à un cycle de soudage, de découpe et/ou de pliage, comprenant les étapes suivantes :
a. disposer le long d'une direction longitudinale (A) une pluralité d'éléments métalliques allongés (2), reposant sur un compartiment de stockage (3, 3') placé dans une zone de collecte (P) ;
b. disposer un appareil (1, 1') pour collecter et alimenter lesdits éléments (2), comprenant une structure fixe (10, 10'), se développant le long de ladite direction longitudinale (A) et ayant un ensemble de préhension (4) comprenant un élément de préhension (40) disposé dans une position active pour collecter lesdits éléments (2) au niveau de ladite zone de collecte (P) ;
c. actionner ledit élément de préhension (40) par rapport audit compartiment de stockage (3, 3') selon un mouvement de collecte, dans une course d'abaissement pour amener ledit élément de préhension (40) vers une partie de préhension (2a) desdits éléments (2) placés à une hauteur de collecte, et dans une course de levage pour soulever au moins une partie desdits éléments (2) au niveau de ladite partie de préhension respective (2a), de ladite hauteur de collecte à une hauteur supérieure, agissant sur lesdits éléments (2) avec une première surface d'actionnement respective (40a) par attraction magnétique ;
d. enlever en poussant loin de la prise attrayante dudit élément de préhension (40) un premier nombre d'éléments (2') en excès, en actionnant un élément de sélection (41) dans un mouvement de sélection d'une configuration inactive à une configuration active le long d'une direction parallèle à ladite première surface de fonctionnement (40a), au moyen d'un bord de référence (41b) dudit élément de sélection (41), et retenir par une surface de support (41a) dudit élément de sélection (41) les éléments (2) restés en prise attirée dudit élément de préhension (40), ainsi sélectionnés, interposés entre ladite première surface de fonctionnement (41a) dudit élément de préhension (40) et ladite surface de support (41a) dudit élément de sélection (41) à ladite configuration active ;
e. actionner ledit ensemble de préhension (4) pour libérer lesdits éléments sélectionnés (2) vers un ensemble de transfert (6) à une hauteur de transfert, pour transférer lesdits éléments sélectionnés (2) vers un trajet d'alimentation (7) disposé en aval.

2. Procédé selon la revendication 1, **caractérisé en ce que**, dans ladite configuration active, ledit élément de sélection (41) est approprié pour supporter lesdits éléments sélectionnés (2) au moyen de ladite surface de support (41a) et ladite surface de support (41a) fait face sous ladite première surface de fonctionnement (40a) et est espacée de celle-ci d'une distance contrôlée, dans laquelle lesdits éléments sélectionnés (2) sont retenus.

3. Procédé selon la revendication 1 ou 2, **caractérisé en ce que** ledit élément de sélection (41) est dans une position retirée au niveau de ladite configuration inactive et dans une position avancée au niveau de ladite configuration active le long de ladite direction dudit mouvement de sélection par rapport à la structure fixe (10, 10'), avancée au moins par ledit élément de préhension (40).

4. Procédé selon l'une quelconque des revendications précédentes, **caractérisé en ce que** ladite étape d. d'actionnement dudit élément de sélection (41) est suivie d'une seconde étape de sélection, par une course de retour contrôlée dudit mouvement de sélection, à la suite de laquelle un second nombre d'éléments (2") en excès est exclu de l'interaction avec ledit élément de sélection (41).

5. Procédé selon l'une quelconque des revendications 2 à 4, **caractérisé en ce que**, dans ledit mouvement de sélection, ladite distance contrôlée est sensiblement égale à une distance entre une fois et deux fois une hauteur transversale desdits éléments (2), de manière à sélectionner un nombre correspondant de rangées desdits éléments (2).

6. Procédé selon l'une quelconque des revendications précédentes, **caractérisé en ce que** ladite étape e. d'actionnement dudit ensemble de préhension (4) pour libérer lesdits éléments (2) est précédée de l'étape de séparation au moyen d'un ensemble de séparation (5, 5') actionné dans un mouvement de séparation le long de ladite direction longitudinale (A) desdits éléments sélectionnés (2) d'une partie restante desdits éléments (2), destinés à rester au moins temporairement dans ledit compartiment de stockage (3).

7. Procédé selon l'une quelconque des revendications précédentes, **caractérisé en ce que** ledit mouvement de séparation se produit à une hauteur intermédiaire entre ladite hauteur de collecte et ladite hauteur de transfert ou sensiblement à ladite hauteur de transfert.

8. Procédé selon l'une quelconque des revendications précédentes, **caractérisé en ce qu'**avant ladite étape c. d'actionnement dudit élément de préhension (40), il prévoit de déplacer ledit compartiment de stockage (3') dans une direction transversale (B) jusqu'à ladite zone de collecte (P) sous-jacente audit élément de préhension (40) dans ladite position active.

9. Procédé selon la revendication 8, **caractérisé en ce qu'**il prévoit de disposer au moins un autre dit compartiment de stockage (3'), dans une position d'attente ou de repos, à l'intérieur d'une ouverture (11) s'étendant longitudinalement sous ladite structure (10, 10').

10. Procédé selon l'une quelconque des revendications précédentes, **caractérisé en ce que**, dans ledit mouvement de transfert, lesdits éléments libérés (2) sont déplacés selon un mouvement solidaire dudit ensemble de transfert (6), de manière à maintenir inchangée une position ordonnée respective.

11. Procédé selon l'une quelconque des revendications précédentes, **caractérisé en ce qu'**il comprend l'étape supplémentaire consistant à déplacer ledit compartiment de stockage (3, 3') et ledit élément de préhension (40) selon un mouvement de régulation dans ladite direction transversale (B) à l'intérieur de ladite zone de collecte (P), si nécessaire ou d'une manière programmée, pour répartir uniformément la collecte desdits éléments (2) à partir dudit compartiment de stockage (3, 3').

12. Procédé selon l'une quelconque des revendications précédentes, **caractérisé en ce qu'**il comprend l'étape supplémentaire consistant à actionner ledit élément de préhension (40) dans un mouvement de désengagement, de ladite position active à une position inactive, rétractable dans ladite structure (10, 10').

13. Procédé selon la revendication 12, **caractérisé en ce que** ledit mouvement de désengagement et/ou un mouvement d'activation correspondant, revenant de ladite position inactive à ladite position active, est un mouvement de translation sensiblement horizontal.

14. Procédé selon la revendication 12 ou 13, **caractérisé en ce qu'**après l'opération dudit mouvement de dégagement, il prévoit d'actionner ledit élément de préhension (40) dans un mouvement de conversion, pour changer sa fonction, se transformant en un élément de support des éléments sélectionnés (2), ledit mouvement de conversion comprenant une première course, dans laquelle ledit élément de préhension (40) est déplacé de ladite position inactive, rétractable dans ladite structure (10, 10'), à une hauteur inférieure à la hauteur de collecte supérieure susmentionnée, et une seconde course de support, dans laquelle ledit élément de préhension (40) est extrait extérieurement de ladite structure (10, 10'), de manière à intercepter lesdits éléments sélectionnés (2) par le bas.

15. Procédé selon la revendication 14, **caractérisé en ce qu'**après ladite étape dans laquelle ledit élément de préhension (40) est actionné dans ledit mouvement de conversion, il comprend l'étape consistant à actionner ledit élément de préhension (40) dans un mouvement de levage, pour amener lesdits éléments interceptés (2) de ladite hauteur supérieure à ladite hauteur de transfert.

16. Procédé selon l'une quelconque des revendications précédentes, **caractérisé en ce qu'**il comprend l'étape supplémentaire consistant à actionner ledit ensemble de transfert (6) dans un mouvement d'insertion à ladite hauteur de transfert à partir d'une configuration d'alimentation (60a), en interaction avec ledit trajet d'alimentation (7) vers une configuration de réception (60b), en interaction avec ledit élément de préhension (40) et/ou des moyens de support équivalents desdits éléments (2) collectés à partir dudit élément de préhension (40).

17. Procédé selon la revendication 16, **caractérisé en ce que** suite audit mouvement d'insertion, lesdits éléments (2) sont libérés vers ledit ensemble de transfert (6) et ensuite déplacés intégralement vers lui dans ladite configuration d'alimentation (60a) au moyen d'un mouvement intégral avec ledit ensemble de transfert (6), gardant ainsi inchangé un agencement ordonné desdits éléments (2).

18. Procédé selon l'une quelconque des revendications précédentes, **caractérisé en ce qu'**il fournit l'étape supplémentaire d'actionnement d'un ensemble de comptage comprenant des moyens de détection configurés pour détecter le poids desdits éléments (2) à l'intérieur dudit compartiment de stockage (3, 3'), lesdits moyens de détection fournissant au moins une donnée relative au poids desdits éléments (2) avant et après le transfert desdits éléments (2) vers des moyens de traitement, pour compter lesdits éléments (2) sélectionnés et transférés à chaque cycle d'actionnement effectué par ledit élément de préhension (40).

19. Procédé selon l'une quelconque des revendications précédentes, **caractérisé en ce qu'**il comprend l'étape supplémentaire de préaccumulation desdits éléments libérés (2), au moyen d'un ensemble de préaccumulation (9) comprenant au moins un élément de support (90) mobile alternativement entre une position immergée par rapport à ladite hauteur de transfert, et une position émergée de celle-ci, active pour soulever lesdits éléments (2) libérés du support sur ledit ensemble de transfert (6).

20. Procédé selon l'une quelconque des revendications précédentes, **caractérisé en ce que** ledit ensemble de préhension (4) est positionné dans une position sensiblement centrale par rapport audit développement longitudinal de ladite structure fixe (10, 10').

21. Appareil pour collecter et alimenter des éléments métalliques allongés, comprenant une structure fixe (10, 10') se développant le long d'une direction longitudinale (A), un ensemble de préhension (4) porté par ladite structure fixe (10, 10') et comprenant un élément de préhension (40) configuré pour fonctionner dans une position active pour collecter un certain nombre desdits éléments (2) à partir d'un compartiment de stockage (3, 3'), configuré pour recevoir en support le long de ladite direction longitudinale (A) une pluralité desdits éléments (2) au niveau d'une zone de collecte (P) sous-jacente audit élément de préhension (40) dans ladite position active, ledit élément de préhension (40) comprenant une première surface opérationnelle (40a) configurée pour agir sur lesdits éléments (2) au moyen d'une attraction magnétique, et pouvant être actionnée dans un mouvement de collecte dans une course d'abaissement à une hauteur de collecte et dans une course de levage à partir de ladite hauteur de collecte à une hauteur supérieure, **caractérisé en ce qu'**il comprend un élément de sélection (41) comprenant une surface de support (41a) pour retenir des éléments (2) sélectionnés parmi ledit nombre desdits éléments (2) et un bord de référence (41b), ledit sélecteur d'élément (41) pouvant être actionné dans un mouvement de sélection dans une direction parallèle à ladite première surface opérationnelle (40a) d'une configuration inactive à une configuration active pour repousser et retirer un premier nombre d'éléments (2') en excès de la prise attrayante dudit élément de préhension (40) et pour retenir interposés entre ladite surface de support (41a) et ladite première surface opérationnelle (40a) au niveau de ladite configuration active lesdits éléments sélectionnés (2), et un ensemble de transfert (6) mobile dans un mouvement de transfert à une hauteur de transfert, pour transférer lesdits éléments sélectionnés (2) vers un trajet d'alimentation (7) disposé en aval, ledit ensemble de préhension (4) étant configuré pour libérer lesdits éléments sélectionnés (2) vers ledit ensemble de transfert (6).

22. Appareil selon la revendication 21, **caractérisé en ce que** ladite surface de support (41a) au niveau de ladite configuration active est tournée sous ladite surface opérationnelle (40a) et espacée de celle-ci d'une distance contrôlée, pour retenir lesdits éléments sélectionnés interposés (2).

23. Appareil selon la revendication 21 ou 22, **caractérisé en ce que** ledit élément de sélection (41) est dans une position retirée au niveau de ladite configuration inactive et est dans une position avancée au niveau de ladite configuration active le long de ladite direction dudit mouvement de sélection par rapport à ladite structure fixe (10, 10'), avancée au moins par ledit élément de préhension (40).

24. Appareil selon l'une des revendications 21 à 23, **caractérisé en ce que** ledit élément de sélection (41) est en outre mobile dans ledit mouvement de sélection dans une seconde étape de sélection, effectuée au moyen d'une course de retour contrôlée, à la suite de laquelle un second nombre d'éléments (2") en excès est exclu de l'interaction avec ledit élément de sélection (41).

25. Appareil selon la revendication 22, **caractérisé en ce que** ladite distance contrôlée est sensiblement égale à un multiple d'une dimension transversale desdits éléments (2), de préférence égale à une distance entre une et deux fois une dimension transversale desdits éléments (2).

26. Appareil selon l'une quelconque des revendications 21 à 25, **caractérisé en ce qu'**il comprend un ensemble de séparation (5, 5') pouvant fonctionner dans un mouvement de séparation le long de ladite direction longitudinale (A) pour séparer lesdits éléments sélectionnés (2) d'une partie restante desdits éléments (2) destinés à rester au moins temporairement dans ledit compartiment de stockage (3).

27. Appareil selon l'une quelconque des revendications 21 à 26, **caractérisé en ce qu'**il est en combinaison avec un dit compartiment de stockage (3') mobile, au moins dans une direction transversale (B), jusqu'à ladite zone de collecte (P) sous-jacente audit élément de préhension (40) dans ladite position active.

28. Appareil selon la revendication 27, **caractérisé en ce qu'**il comprend un autre dit compartiment de stockage mobile (3'), ladite structure (10') comprenant une ouverture (11) s'étendant longitudinalement sous ladite structure (10, 10'), pour se disposer à l'intérieur dudit autre compartiment de stockage (3') dans une position d'attente ou de repos.

29. Appareil selon la revendication 27 ou 28, **caractérisé en ce que** ladite structure fixe (10') est en forme de pont, ladite ouverture (11) traversant ainsi le passage et/ou le logement dudit compartiment de stockage (3') et/ou d'un compartiment de stockage supplémentaire (3').

30. Appareil selon l'une quelconque des revendications 21 à 29, **caractérisé en ce que** ledit mouvement de transfert est un mouvement de translation pour maintenir un agencement ordonné inchangé desdits éléments libérés (2).

31. Appareil selon l'une quelconque des revendications 21 à 30, **caractérisé en ce qu'**il comprend des moyens d'actionnement pour actionner dans un mouvement de réglage relatif dans une direction transversale (B) ledit compartiment de stockage (3, 3') et ledit élément de préhension (40) à l'intérieur de ladite zone de collecte (P), si nécessaire ou d'une manière programmée, pour répartir uniformément la collecte desdits éléments (2).

32. Appareil selon l'une quelconque des revendications 21 à 31, **caractérisé en ce que** ledit ensemble de transfert (6) est mobile selon un mouvement d'insertion à ladite hauteur de transfert dans une direction transversale (B) d'une configuration d'alimentation (60a), en interaction avec ledit trajet d'alimentation (7) à une configuration de réception (60b), en interaction avec ledit élément de préhension (40) et/ou des moyens de support desdits éléments (2) collectés à partir dudit élément de préhension (40).

33. Appareil selon la revendication 32, **caractérisé en ce que** ledit mouvement d'insertion est un mouvement de translation entre ladite configuration d'alimentation (60a) et ladite configuration de réception (60b), pour transporter lesdits éléments (2) collectés dans un mouvement intégral, de manière à maintenir un agencement ordonné respectif.

34. Appareil selon l'une quelconque des revendications 21 à 33, **caractérisé en ce qu'**il comprend un ensemble de comptage comprenant des moyens de détection configurés pour détecter le poids desdits éléments (2) lorsqu'ils sont disposés à l'intérieur dudit compartiment de stockage (3, 3'), et pour fournir au moins une donnée relative au poids desdits éléments (2) avant et après le transfert desdits éléments sélectionnés (2) vers des moyens de traitement, pour compter à chaque cycle d'actionnement effectué par ledit ensemble de préhension (40) lesdits éléments sélectionnés (2).

35. Appareil selon l'une quelconque des revendications 21 à 34, **caractérisé en ce qu'**il comprend un ensemble de préaccumulation (9) configuré pour coopérer avec ledit ensemble de transfert (6) et comprenant au moins un élément de support (90) mobile alternativement entre une position immergée par rapport à ladite hauteur de transfert, dans laquelle ledit ensemble de préaccumulation (9) n'interfère pas avec ledit ensemble de transfert (6), et une position active émergeant de ladite hauteur de transfert, pour soulever lesdits éléments (2) du support sur ledit ensemble de transfert (6).

36. Appareil selon l'une quelconque des revendications 21 à 35, **caractérisé en ce que** ledit élément de préhension (40) est mobile dans un mouvement de dégagement, de ladite position active à une position inactive, rétractable dans ladite structure (10, 10').

37. Appareil selon la revendication 36, **caractérisé en ce que** ledit élément de préhension (40) est mobile dans un mouvement de conversion, pour changer sa fonction, se transformant en un élément de support desdits éléments sélectionnés (2), ledit mouvement de conversion comprenant une première course, dans laquelle ledit élément de préhension (40) est déplacé depuis ladite position inactive, rétractable dans ladite structure (10, 10'), à une hauteur inférieure à la hauteur de collecte supérieure susmentionnée, et une seconde course de support, dans laquelle ledit élément de préhension (40) est extrait à l'extérieur de ladite structure (10, 10'), pour intercepter lesdits éléments collectés (2) au moyen d'une seconde surface opérationnelle supérieure respective (40b).

38. Appareil selon la revendication 37, **caractérisé en ce que** ledit élément de préhension (40) est mobile dans un mouvement de levage, pour amener lesdits éléments interceptés (2) de ladite hauteur supérieure à ladite hauteur de transfert.

39. Appareil selon l'une quelconque des revendications 21 à 38, **caractérisé en ce que** ledit ensemble de préhension (4) est positionné dans une position sensiblement centrale dudit développement longitudinal de ladite structure fixe (10, 10').
